# EUROPÄISCHE PATENTSCHRIFT

(11) **EP 1 514 714 B1**
(45) Veröffentlichungstag und Bekanntmachung des Hinweises auf die Patenterteilung: **28.03.2012**
(21) Anmeldenummer: 04021175.7
(22) Anmeldetag: 07.09.2004
(51) Int. Cl.: B60J 7/22

(54) **Cabriofahrzeug**
Convertible vehicle
Véhicule convertible

(30) Priorität: 09.09.2003 DE 10341989
(43) Veröffentlichungstag der Anmeldung: 16.03.2005
(73) Patentinhaber: SCAMBIA Industrial Developments Aktiengesellschaft, 9494 Schaan (LI)
(72) Erfinder: Eisenschmidt, Jens, 75181 Pforzheim (DE); Riehle, Jörg, 71679 Asperg (DE)
(74) Vertreter: Hoeger, Stellrecht & Partner Patentanwälte

(56) Entgegenhaltungen:
- EP-A- 0 965 470
- DE-A- 4 119 529
- DE-A- 10 035 995
- DE-A- 10 131 397
- DE-A- 19 536 552
- DE-A- 19 632 352
- DE-A- 19 752 068
- DE-C- 19 602 598
- US-B2- 6 557 928

## Beschreibung

Die Erfindung betrifft ein Cabriofahrzeug umfassend eine Fahrzeugkarosserie mit einem Fahrgastraum, mindestens eine in dem Fahrgastraum angeordnete Sitzreihe, eine hinter der mindestens einen Sitzreihe angeordnete und eine einem Heck der Fahrzeugkarosserie zugewandte Aussparung aufweisende Überrollschutzeinrichtung mit mindestens zwei quer zu einer Längsrichtung der Fahrzeugkarosserie im Abstand voneinander angeordneten und sich über die Fahrzeugkarosserie erhebenden Ständern und mit mindestens einer sich zwischen mindestens zwei Ständern erstreckenden Querstrebe, und eine hinter der mindestens einen Sitzreihe angeordnete Windschotteinrichtung, welche einen Luftstrom durch die mindestens eine Aussparung der Überrollschutzeinrichtung reduziert, und welche eine Flachmaterialführungseinrichtung und ein von der Flachmaterialführungseinrichtung gehaltenes windabweisendes Flachmaterial aufweist.

Ein derartiges Fahrzeug ist aus der Fig. 3 und 4 der EP 0 965 470 A1 bekannt.

Der Nachteil eines derartigen Cabriofahrzeugs ist darin zu sehen, dass die Windschotteinrichtung ungünstig angeordnet ist.

Der Erfindung liegt daher die Aufgabe zugrunde, ein Cabriofahrzeug der gattungsgemäßen Art derart zu verbessern, dass die Windschotteinrichtung in Kombination mit der Überrollschutzeinrichtung günstig angeordnet und einfach handhabbar ist.

Diese Aufgabe wird bei einem Cabriofahrzeug der eingangs beschriebenen Art erfindungsgemäß dadurch gelöst, dass die Flachmaterialführungseinrichtung das windabweisende Flachmaterial in einer Aktivposition in einer die Ständer schneidenden Fläche hält und dabei die mindestens eine Aussparung windhindernd verschließt, und dass das windabweisende Flachmaterial mittels der Flachmaterialführungseinrichtung von der Aktivposition in eine in der Fahrzeugkarosserie liegende Verstauposition, in welche das windabweisende Flachmaterial die Aussparung freigibt, bringbar ist und umgekehrt.

Der Vorteil der erfindungsgemäßen Lösung ist darin zu sehen, dass einerseits die Flachmaterialführungseinrichtung das windabweisende Flachmaterial in der Aktivposition in einer die Ständer der Windschotteinrichtung schneidenden Fläche hält, so dass das windabweisende Flachmaterial über die Überrollschutzeinrichtung nicht übersteht und dass außerdem die Flachmaterialführungseinrichtung die Möglichkeit eröffnet, das windabweisende Flachmaterial durch die Flachmaterialführungseinrichtung geführt in die Verstauposition zu bringen und umgekehrt. Damit entfällt das aus dem Stand der Technik bekannte nachteilige Befestigen des windabweisenden Flachmaterials an der Überrollschutzeinrichtung und auch das manuelle Lösen des windabweisenden Flachmaterials von der Überrollschutzeinrichtung und Transportieren des windabweisenden Flachmaterials in die Verstauposition.

Prinzipiell wäre es denkbar, die Flachmaterialführungseinrichtung so auszubilden, dass diese manuell betätigbar ist, um das Flachmaterial zwischen der Aktivposition und der Verstauposition zu bewegen.

Besonders günstig ist es, wenn die Flachmaterialführungseinrichtung mit einem Antrieb versehen ist, um das windabweisende Flachmaterial zwischen der Aktivposition und der Verstauposition und umgekehrt zu bewegen.

Dabei ist vorzugsweise der Antrieb als elektrischer Antrieb ausgebildet.

Hinsichtlich der Anordnung der Verstauposition sind keine weiteren Angaben gemacht. So sieht eine besonders vorteilhafte Lösung vor, daß in der Fahrzeugkarosserie eine an die Überrollschutzeinrichtung angrenzend angeordnete Verstauaufnahme für das windabweisende Flachmaterial in der Verstauposition vorgesehen ist.

Mit einer derartigen an die Überrollschutzeinrichtung angrenzenden Verstauaufnahme läßt sich das windabweisende Flachmaterial besonders günstig von der Flachmaterialführungseinrichtung zwischen der Aktivposition und der Verstauposition bewegen.

Die Verstauaufnahme könnte beispielsweise über den Fahrgastraum der Fahrzeugkarosserie zugänglich sein.

Besonders günstig ist es jedoch, wenn die Verstauaufnahme eine der Überrollschutzeinrichtung zugewandte Austrittsöffnung für das Flachmaterial aufweist, so daß das aus dieser austretende Flachmaterial nach Austreten aus der Austrittsöffnung unmittelbar in seine Aktivposition bringbar ist.

Besonders günstig ist es, wenn die Fläche, in welcher sich das Flachmaterial in der Aktivposition erstreckt, die Austrittsöffnung durchsetzt, so daß lediglich ein Bewegen des Flachmaterials in der Fläche, in welcher es sich in seiner Aktivposition erstreckt, erforderlich ist, um das Flachmaterial durch die Austrittsöffnung hindurch in die Verstauaufnahme zu bewegen.

Um die Austrittsöffnung bei in Verstaustellung stehender Flachmaterialführungseinrichtung verschließen zu können, wäre es denkbar, ein separates Verschlußelement vorzusehen.

Besonders günstig ist die erfindungsgemäße Lösung jedoch dann, wenn die Flachmaterialführungseinrichtung ein Verschlußelement für die Austrittsöffnung umfaßt.

Vorzugsweise ist dabei das Verschlußelement durch die Bewegungen der Flachmaterialführungseinrichtung zwischen der Verstaustellung und der Aktivstellung bewegbar und verschließt in der Verstaustellung der Flachmaterialführungseinrichtung die Austrittsöffnung.

Hinsichtlich der Ausbildung des Flachmaterials sind unterschiedlichste Möglichkeiten denkbar. Beispielsweise wäre es denkbar, das Flachmaterial als selbsttragendes, in sich steifes oder zumindest als einen äußeren Rahmen noch durch seine Eigensteifigkeit versteifendes windabweisendes Flachmaterial, beispielsweise aus Draht- oder Kunststoffgitter auszubilden.

Hinsichtlich eines möglichen Verstauens des Flachmaterials hat es sich als besonders günstig erwiesen, wenn das windabweisende Flachmaterial biegeschlaff ist.

Insbesondere im Fall eines biegeschlaffen Flachmaterials oder auch im Fall eines nicht ausreichend eigensteifen Flachmaterials ist es günstig, wenn die Flachmaterialführungseinrichtung eine Aufspannvorrichtung umfaßt, mit welcher das Flachmaterial in der Aktivposition über die Aussparung hinweg aufspannbar ist.

Eine derartige Aufspannvorrichtung kann in unterschiedlichster Art und Weise ausgebildet sein.

Eine Art der Aufspannvorrichtung sieht vor, daß diese einen in einer Führung bewegbaren und das windabweisende Flachmaterial in einer Querrichtung gespannt haltenden Bügel umfaßt.

Alternativ zu dieser Lösung sieht eine andere insbesondere für biegeschlaffes Flachmaterial bevorzugte Lösung vor, daß die Aufspannvorrichtung zwei zwischen einer Aktivstellung einer Verstaustellung verschwenkbare Arme aufweist, welche in der Aktivstellung das Flachmaterial in der Querrichtung gespannt halten.

Vorzugsweise sind dabei die Arme nahe den die jeweilige mindestens eine Aussparung außenseitig begrenzenden Ständern schwenkbar gelagert und erstrecken sich in der Aktivstellung ungefähr parallel zu diesen.

Ferner erstrecken sich die Arme vorzugsweise in der Verstaustellung quer zu den Ständern

Um bei einem biegeschlaffen windabweisenden Flachmaterial sicher zu stellen, daß dieses in der Verstauposition möglichst wenig geknickt positionierbar ist, ist vorzugsweise die Flachmaterialführungseinrichtung so ausgebildet, daß sie eine in der Fahrzeugkarosserie angeordnete Einzugseinrichtung zum Bewegen des Flachmaterials in die Verstauposition umfaßt.

Eine derartige Einzugseinrichtung könnte beispielsweise so ausgebildet sein, daß sie das windabweisende Flachmaterial in schlaufenförmigen Lagen positioniert.

Eine besonders einfache Einzugseinrichtung sieht vor, daß die Einzugseinrichtung eine Aufwickeleinrichtung für das windabweisende Flachmaterial umfaßt.

Eine alternative Ausführungsform der Flachmaterialführungseinrichtung sieht vor, daß diese einen das Flachmaterial aufnehmenden Rahmen und eine Verschiebeführung für die Bewegung des Rahmens zwischen einer Verstaustellung und einer Aktivstellung umfaßt.

Mit einem derartigen Rahmen besteht die Möglichkeit sowohl biegeschlaffes Flachmaterial als auch in sich steifes Flachmaterial, wie beispielsweise Metall oder Kunststoffgitter, auszurichten, zu halten und zu führen.

Besonders günstig ist es, wenn durch die Verschiebeführung der Rahmen in der Verstaustellung als Ganzes in der Fahrzeugkarosserie versenkt angeordnet ist.

Hinsichtlich der Ausbildung des Rahmens zum Halten des Flachmaterials sind die unterschiedlichsten Möglichkeiten denkbar.

Eine einfache Möglichkeit sieht vor, die Flachmaterialführungseinrichtung so auszubilden, daß diese einen einteiligen Rahmen zum Halten des Flachmaterials aufweist.

Beispielsweise ist dabei der einteilige Rahmen so ausgebildet, daß er in der Aktivstellung der Flachmaterialführungseinrichtung das Flachmaterial in allen Aussparungen windhindernd positioniert.

Insbesondere bei einer Ausführungsform mit inneren Ständern hat dies zur Konsequenz, daß der einteilige Rahmen sich durch die inneren Ständer hindurcherstrecken muß.

Alternativ zum Vorsehen eines einteiligen Rahmens ist bei einem anderen Ausführungsbeispiel die Flachmaterialführungseinrichtung so ausgebildet, daß sie einen mehrteiligen Rahmen aufweist.

Ein derartiger mehrteiliger Rahmen ist beispielsweise so ausgebildet, daß dieser mehrere, durch einen gemeinsamen Träger gehaltene Teilrahmen umfaßt.

Beim Vorstehen derartiger mehrerer Teilrahmen besteht die Möglichkeit, insbesondere beim Vorhandensein innerer Ständer, diese so auszubilden, daß der Rahmen die inneren Ständer nicht durchsetzen muß, sondern beispielsweise an den inneren Ständern lediglich geführt ist oder sich an diesen anliegend abstützt.

Dabei ist der mehrteilige Rahmen vorzugsweise ebenfalls jedoch so ausgebildet, daß alle Teilrahmen gemeinsam, vorzugsweise durch eine gemeinsame Antriebseinrichtung von der Aktivstellung in die Verstaustellung und umgekehrt bewegbar sind.

Vorzugsweise steht dabei der Rahmen in der Verstaustellung in einer sich quer zur Fahrzeuglängsrichtung erstreckenden Fläche, wobei die Fläche vorzugsweise mit der Fläche zusammenfällt, in welcher sich der Rahmen in der Aktivstellung erstreckt.

Hinsichtlich der Ausbildung der Überrollschutzeinrichtung selbst wurden bislang noch keine näheren Angaben gemacht.

Eine einfache Form der Überrollschutzeinrichtung sieht dabei vor, daß diese zwei jeweils gegenüberliegenden Längsseiten der Fahrzeugkarosserie zugewandte und insbesondere nahe derselben angeordnete und durch die Querstrebe verbundene äußere Ständer umfaßt.

In diesem Fall weist die Überrollschutzeinrichtung vorzugsweise eine von den äußeren Ständern und der Querstrebe umschlossene Aussparung auf.

Eine andere bevorzugte Lösung sieht vor, daß die Überrollschutzeinrichtung zwei Überrollschutzelemente umfaßt, von denen jedes zwei Ständer und eine Querstrebe aufweist.

Vorzugsweise sind dabei die Überrollschutzelemente so ausgebildet, daß sie einen äußeren, der jeweiligen Längsseite der Fahrzeugkarosserie zugewandt angeordneten Ständer und einen inneren Ständer aufweisen, die durch die Querstrebe miteinander verbunden sind.

Hinsichtlich der in einer derartigen Überrollschutzeinrichtung gebildeten Aussparungen sind die unterschiedlichsten Möglichkeiten denkbar. So liegt zweckmäßigerweise in einem Fall eine Aussparung der Überrollschutzeinrichtung zwischen den Überrollschutzelementen, wobei diese Aussparung beispielsweise auf einer der Fahrzeugkarosserie gegenüberliegenden Seite nicht durch eine Querstrebe begrenzt sein kann.

Darüber hinaus besteht die Möglichkeit, innerhalb der Überrollschutzelemente keine Aussparung vorzusehen. Aus optischen Gründen und aus Gründen einer günstigen Strömungsführung ist vorzugsweise vorgesehen, daß jedes der Überrollschutzelemente eine weitere von den Ständern und den Querstreben umgebene Aussparung aufweist.

Hinsichtlich der Integration der Flachmaterialführungseinrichtung und der Ständer wurden bislang keine näheren Angaben gemacht. So sieht eine vorteilhafte Lösung vor, daß mindestens zwei der Ständer mindestens eine Aufnahme für die Flachmaterialführungseinrichtung aufweisen.

Beispielsweise ist in diesem Zusammenhang vorgesehen, daß die äußeren Ständer jeweils eine Aufnahme aufweisen.

Alternativ oder ergänzend hierzu ist vorgesehen, daß mindestens ein innerer Ständer mindestens eine Aufnahme aufweist.

Besonders zweckmäßig ist es, wenn die äußeren Ständer die Aufnahme aufweisen, so daß sich zweckmäßigerweise das windabweisende Flachmaterial in der Querrichtung zwischen den äußeren Ständern der Überrollschutzeinrichtung erstreckt.

Ferner ist vorzugsweise vorgesehen, daß mindestens einer der inneren Ständer von dem in der Aktivposition stehenden Flachmaterial durchsetzt ist.

Um dies realisieren zu können, sind vorzugsweise die inneren Ständer mit Querdurchbrüchen versehen, die diese vollständig in der Querrichtung durchsetzen und sich vorzugsweise von der Fahrzeugkarosserie bis zu den Querstreben erstrecken.

Hinsichtlich der Ausbildung der Ständer selbst, insbesondere im Verhältnis zur Tragstruktur der Überrollschutzeinrichtung wurden bislang keine näheren Angaben gemacht. So sieht eine bevorzugte Lösung vor, daß die Ständer ein die Tragstruktur bildendes Außengehäuse aufweisen.

Darüber hinaus ist vorzugsweise auch vorgesehen, daß die Querstreben ein die Tragstruktur bildendes Außengehäuse aufweisen.

Eine andere, insbesondere ästhetisch günstig gestaltbare Lösung sieht vor, daß die Ständer ein Ständergehäuse und eine im Ständergehäuse verlaufende Tragstruktur aufweisen. In diesem Fall ist somit eine Trennung zwischen dem Ständergehäuse und der Tragstruktur erfolgt, die es ermöglicht, einerseits die Tragstruktur möglichst kostengünstig und stabil auszubilden und andererseits das optische Erscheinungsbild der Ständer über die von der Tragstruktur getrennten Ständergehäuse zu realisieren.

In gleicher Weise ist vorzugsweise dann auch vorgesehen, daß die mindestens eine Querstrebe ein Querstrebengehäuse und eine Tragstruktur aufweist, so daß auch im Bereich der Querstrebe eine Trennung zwischen dem ästhetisch zu gestaltenden Querstrebengehäuse und der Tragstruktur vorgenommen ist.

Insbesondere dann, wenn das Flachmaterial in der Aktivposition mindestens einen der Ständer durchsetzt, ist es vorteilhaft, wenn die Tragstruktur auf einer Seite der Fläche angeordnet ist, in welcher sich das Flachmaterial in der Aktivposition erstreckt, während auf der anderen Seite der Fläche lediglich der entsprechende Teil des Ständergehäuses oder Querstrebengehäuses angeordnet ist.

Vorzugsweise gilt dies auch für die Tragstruktur im Bereich der Querstrebe, die vorzugsweise auf derselben Seite der Fläche angeordnet ist, wie die Tragstruktur der Ständer.

Weitere Merkmale und Vorteile sind Gegenstand der nachfolgenden Beschreibung sowie der zeichnerischen Darstellung einiger Ausführungsbeispiele.

In der Zeichnung zeigen:
- Fig. 1: eine perspektivische Darstellung eines ersten Aus- führungsbeispiels eines erfindungsgemäßen Cabrio- fahrzeugs;
- Fig. 2: eine schematische Darstellung von Überrollschut- einrichtung, Windschotteinrichtung und Verstauaufnahme beim ersten Ausführungsbeispiel;
- Fig. 3: einen Schnitt längs Linie 3-3 in Fig. 1;
- Fig. 4: einen Schnitt entsprechend Fig. 3 bei in Verstaustellung stehenden windabweisendem Flachmaterial;
- Fig. 5: eine Darstellung ähnlich Fig. 1 eines zweiten Aus- führungsbeispiels;
- Fig. 6: eine vergrößerte ausschnittsweise Darstellung von Über- rollschutzeinrichtung und Windschotteinrichtung in Aktiv- position des windabweisenden Flachmaterials;
- Fig. 7: einen Schnitt längs Linie 7-7 in Fig. 6;
- Fig. 8: eine Darstellung einer Zwischenstellung des windab- weisenden Flachmaterials zwischen der Aktivstellung und der Verstaustellung;
- Fig. 9: eine schematische Darstellung von Armen der Flach- materialführungseinrichtung sowohl in Aktivstellung (mit durchgezogenen Linien) als auch in Verstaustellung (mit gestrichelten Linien);
- Fig. 10: eine Darstellung ähnlich Fig. 9 eines dritten Aus- führungsbeispiels des erfindungsgemäßen Cabrio- fahrzeugs;
- Fig. 11: einen Schnitt längs Linie 11-11 in Fig. 10;
- Fig. 12: eine Darstellung ähnlich Fig. 6 eines vierten Aus- führungsbeispiels des erfindungsgemäßen Cabrio- fahrzeugs mit Überrollschutzeinrichtung und Wind- schotteinrichtung;
- Fig. 13: eine Darstellung ähnlich Fig. 8 mit einem zwischen der Aktivstellung der Verstaustellung stehenden Rahmen einer Flachmaterialführungseinrichtung;
- Fig. 14: eine Darstellung ähnlich Fig. 9 des Rahmens der Flach- materialführungseinrichtung in der Aktivstellung (mit durchgezogenen Linien) und der Verstaustellung (mit gestrichelten Linien);
- Fig. 15: eine Schnittdarstellung längs Linie 15-15 in Fig. 17 bei einem fünften Ausführungsbeispiel eines erfindungs- gemäßen Cabriofahrzeugs mit Überrollschutzeinrichtung und Windschotteinrichtung bei in Aktivstellung stehen- dem Rahmen;
- Fig. 16: eine Darstellung ähnlich Fig. 15 bei in Verstaustellung stehendem Rahmen;
- Fig. 17: einen Schnitt längs Linie 17-17 in Fig. 18;
- Fig. 18: einen Schnitt längs Linie 18-18 in Fig. 15,
- Fig. 19: eine Darstellung ähnlich Fig. 6 eines sechsten Aus- führungsbeispiels des erfindungsgemäßen Cabrio- fahrzeugs mit Überrollschutzeinrichtung und Wind- schotteinrichtung mit in der Aktivstellung der Flach- materialführungseinrichtung und
- Fig. 20: eine Darstellung des fünften Ausführungsbeispiels ent- sprechend Fig. 19 mit in der Verstaustellung stehender Flachmaterialführungseinrichtung.

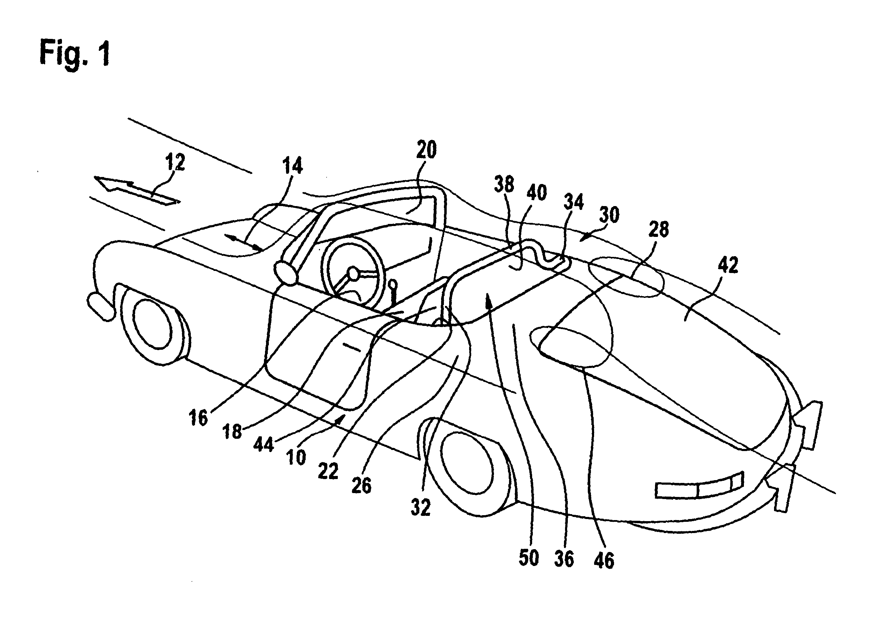

Ein in Fig. 1 dargestelltes erstes Ausführungsbeispiel eines Cabriofahrzeugs umfaßt eine Fahrzeugkarosserie 10, mit einer sich in einer Fahrtrichtung 12 erstreckenden Längsrichtung 14, und mit einem in der Fahrzeugkarosserie 10 angeordneten Fahrgastraum 16, in welchem mindestens eine Sitzreihe 18 angeordnet ist.

Im Bereich eines einer Windschutzscheibe 20 gegenüberliegenden hinteren Endes 22 des Fahrgastraums 16 ist eine als Ganzes mit 30 bezeichnete Überrollschutzeinrichtung angeordnet, welche beim ersten Ausführungsbeispiel zwei jeweils nahe Längsseiten 26, 28 der Fahrzeugkarosserie 10 und somit im Abstand voneinander angeordnete äußere Ständer 32, 34 umfaßt, welche über eine Oberseite 36 der sich an das hintere Ende 22 des Fahrgastraums 16 anschließenden Fahrzeugkarosserie 10 nach oben überstehen und durch eine Querstrebe 38 miteinander verbunden sind.

Die äußeren Ständer 34 und die Querstrebe 38 umschließen dabei eine Aussparung 40 der Überrollschutzeinrichtung 30, welche dem Fahrer im Fahrgastraum 16 ermöglicht, durch die Überrollschutzeinrichtung 30 hindurch in Richtung eines Hecks 42 der Fahrzeugkarosserie 10 zu blicken.

Um nun in einem hinter der Windschutzscheibe 20 und über der Sitzreihe 18 liegenden Kopfbereich 44 von Insassen Zugerscheinungen von sich hinter dem Fahrgastraum 16 und der Überrollschutzeinrichtung 30 bildenden Luftwirbeln 46 zu vermeiden, ist die Überrollschutzeinrichtung 30 mit einer Windschotteinrichtung 50 kombiniert, welche eine Ausbreitung der Luftwirbel 46 sich in Richtung des Kopfbereichs 44 der Insassen behindert.

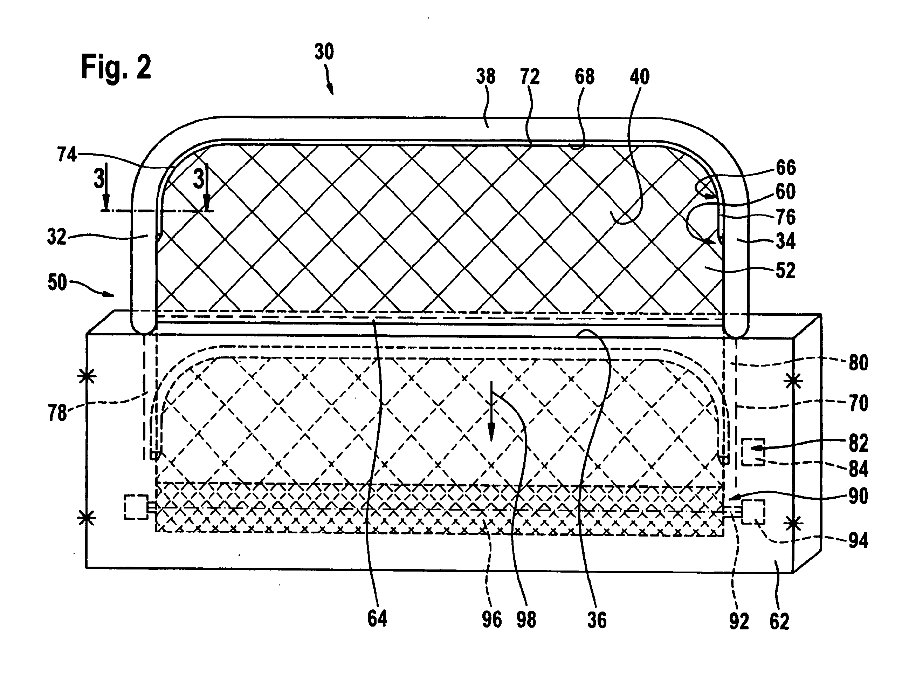

Diese Windschotteinrichtung 50 umfaßt, wie in Fig. 2 im Detail dargestellt, ein Flachmaterial 52, welches einerseits zumindest begrenzt lichtdurchlässig und andererseits luftdurchlässig, jedoch windabweisend ist und welches somit in der in Fig. 2 dargestellten Aktivposition die Aussparung 40 der Überrollschutzeinrichtung 30 windhindernd verschließt und folglich aufgrund dieser Eigenschaften die Insassen störende Luftströme unterbindet.

Beim ersten Ausführungsbeispiel ist das Flachmaterial 52 beispielsweise ein biegeschlaffes Flachmaterial, welche durch eine als Ganzes mit 60 bezeichnete Flachmaterialführungseinrichtung in die Aktivposition, in Fig. 2 durchgezogen dargestellt, bringbar ist, in welcher das Flachmaterial 52 die Aussparung 40 verschließt, und andererseits in eine in Fig. 2 gestrichelt gezeichnete Verstauposition in der Fahrzeugkarosserie 10 unterhalb der Oberseite 36 bringbar ist, in welcher das Flachmaterial 52 die Aussparung 40 freigibt, wobei in der Verstauposition das Flachmaterial 52 in einer Verstauaufnahme 62 innerhalb der Fahrzeugkarosserie 10 angeordnet ist die eine Austrittsöffnung 64 aufweist, aus welcher das Flachmaterial 52 zum Erreichen der Aktivposition austreten kann. Dabei erstreckt sich die Austrittsöffnung 64 vorzugsweise zwischen den äußeren Ständern 32 und 34 über die gesamte Breite der Aussparung 40.

Die Flachmaterialführungseinrichtung 60 umfaßt beim ersten Ausführungsbeispiel eine als Ganzes mit 66 bezeichnete Aufspannvorrichtung, die einen Bügel 68 aufweist, der in einer Vertikalführung 70 geführt ist und mit dieser Vertikalführung 70 zwischen einer Aktivstellung und einer Verstaustellung bewegbar ist.

In der Aktivstellung liegt der Bügel 68 mit einem Querholm 72 an einer Unterseite der Querstrebe 38 an und erstreckt sich mit Seitenholmen 74 und 76 zumindest über einen sich an die Querstrebe 38 anschließenden Teilabschnitt der äußeren Ständer 32 und 34, wobei die Seitenholme 74 und 76 in Führungsschienen 78 und 80 der Vertikalführung 70 geführt sind, und wobei sich die Führungsschienen 78 und 80 soweit in die Verstauaufnahme 62 hineinerstrecken, daß der gesamte Bügel 68 von der Aktivstellung, in Fig. 2 durchgezogen dargestellt, in eine Verstaustellung, in Fig. 2 gestrichelt dargestellt, bewegbar ist, in welcher der gesamte Bügel 68 in der Verstauaufnahme 62 angeordnet ist und nicht über die Austrittsöffnung 64 der Verstauaufnahme übersteht.

Das Bewegen des Bügels 68 kann manuell erfolgen. Bevorzugt ist jedoch ein Bewegen des Bügels 68 mittels eines Antriebs 82, welcher beispielsweise einen Antriebsmotor 84 und auf die Seitenholme 74 und 76 des Bügels 68 wirkende, jedoch zeichnerisch in Fig. 2 nicht dargestellte Seilzüge umfaßt, die durch den Antriebsmotor 84 antreibbar sind, um den Bügel 68 von der Aktivstellung in die Verstaustellung und umgekehrt zu bewegen.

Da das Flachmaterial 52 vorzugsweise ein biegeschlaffes Flachmaterial ist, ist es notwendig, dieses in die Verstauaufnahme 62 einzuziehen, wenn der Bügel 68 von der Aktivstellung in die Verstaustellung verfahren wird.

Aus diesem Grund ist hierzu eine Einzugseinrichtung 90 vorgesehen, welche bei dem ersten Ausführungsbeispiel als Wickeleinrichtung mit einer Wickelwelle 92 und einem Wickelantrieb 94 ausgebildet ist, mit welchen das Flachmaterial 52 auf die Wickelwelle 92 zu einem Wickel 96 aufwickelbar ist und zwar über seine gesamte Breite zwischen den äußeren Ständern 32 und 34.

Der Wickelantrieb 94 kann beispielsweise ein Antrieb mit einem Federspeicher sein, so daß das Flachmaterial 52 sowohl in der Verstaustellung des Bügels 68 als auch in der Aktivstellung des Bügels 68 durch die Wickelwelle 92 zugbeaufschlagt ist und somit stets zwischen dem Bügel 68 und der Wickelwelle 92 in Aufwickelrichtung 98 gespannt gehalten ist.

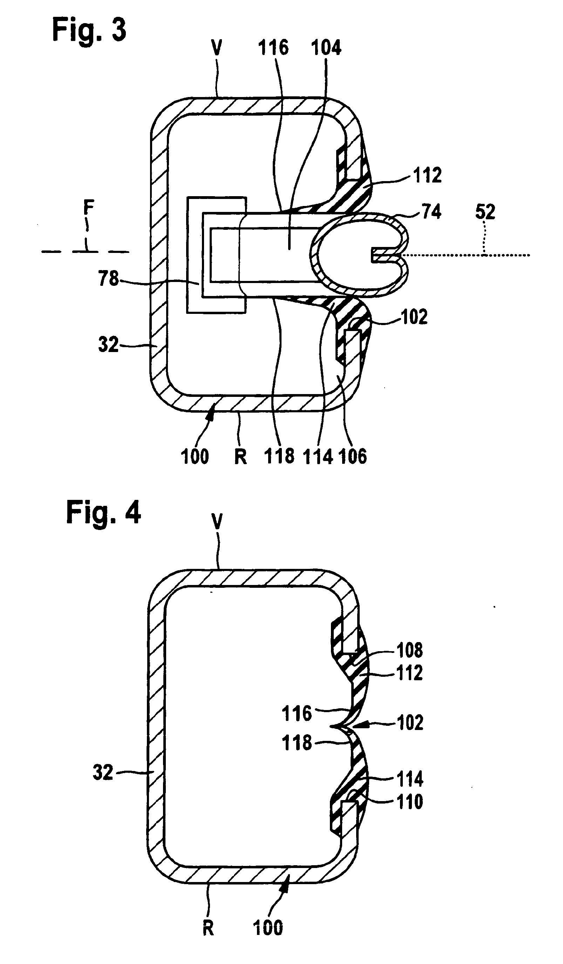

Wie in Fig. 3 dargestellt, sind bei dem ersten Ausführungsbeispiel sowohl der äußere Ständer 32 und 34 als auch die Querstrebe 38 so ausgebildet, daß sie selbst eine Tragstruktur 100 durch ihre Ausbildung als stabiles Metallrohr bilden, wobei diese äußeren Ständer 32, 34 zur teilweisen Aufnahme der Seitenholme 74 und 76 mit auf einander zugewandten Seiten der Ständer 32, 34 mit einem sich in Längsrichtung derselben erstreckenden Durchbruch 102 versehen, in welchen die Seitenholme 74 und 76 zum Teil eingreifen, so daß an den Seitenholmen 74 und 76 gehaltene Führungskörper 104 in einem Innenraum 106 der Tragstruktur verlaufen können und in den ebenfalls innerhalb des Innenraums 106 verlaufenden Führungsschienen 78 geführt werden können, so daß der Durchbruch 102 mit dem Innenraum 106 eine Aufnahme für Flachmaterialführungseinrichtung 60 bildet.

Vorzugsweise ist der Durchbruch 102 mit an Rändern 108, 110 desselben gehaltenen elastischen Lippen 112 und 114 versehen, die im unbeaufschlagten Zustand den Durchbruch 102 dadurch verschließen, daß sie mit ihren inneren Enden 116 und 118 aneinander anliegen, während die Lippen 112 und 114 durch die teilweise eindringenden Seitenholme 74 und 76 auseinandergedrückt werden können, um das teilweise Eintreten der Seitenholme 74 und 76 in den Durchbruch 102 zu ermöglichen.

Im Gegensatz zu den äußeren Ständern 32 und 34 ist ein Durchbruch 102 im Bereich der Querstrebe 38 nicht erforderlich, da der Bügel 68 mit dem Querholm 72 in der Aktivstellung an einer Unterseite der Querstrebe 38 angelegt werden kann.

Wie in Fig. 3 dargestellt, liegt somit in der Aktivposition das Flachmaterial 52 in einer Ebene F, die sich quer zur Fahrzeuglängsrichtung 14 erstreckt und die äußeren Ständer 32 und 34 und beim ersten Ausführungsbeispiel auch die Tragstruktur 100 sowie die Austrittsöffnung 64 schneidet, so daß die Flachmaterialbahn 52 insgesamt zwischen einer Vorderseite V und einer Rückseite R der Ständer 32, 34 liegt.

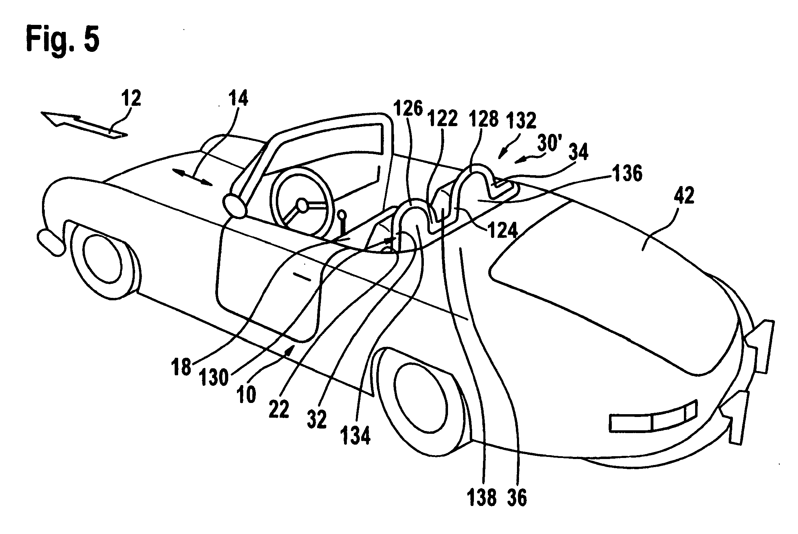

Bei einem zweiten Ausführungsbeispiel eines erfindungsgemäßen Cabriofahrzeugs, dargestellt in Fig. 5, sind diejenigen Elemente, die mit denen des ersten Ausführungsbeispiels identisch sind, mit denselben Bezugszeichen versehen, so daß hinsichtlich der Beschreibung derselben vollinhaltlich auf die Ausführungen zum ersten Ausführungsbeispiel Bezug genommen werden kann.

Im Gegensatz zum ersten Ausführungsbeispiel ist die Überrollschutzeinrichtung 30' nicht nur mit den äußeren Ständern 32 und 34 versehen, sondern mit zusätzlich zwischen den äußeren Ständern 32 und 34 liegenden inneren Ständern 122 und 124, die ebenfalls im Abstand voneinander angeordnet sind.

Ferner ist keine zwischen den äußeren Ständern 32 und 34 verlaufende Querstrebe vorhanden, sondern es sind jeweils zwischen einem äußeren Ständer 32, 34 und einem diesem zugeordneten inneren Ständer 122 bzw. 124 jeweils Querstreben 126, 128 vorgesehen, so daß insgesamt die Überrollschutzeinrichtung 30' zwei Überrollschutzelemente 130, 132 umfaßt, von denen jedes beispielsweise hinter einem der Sitze der Sitzreihe 18 angeordnet ist.

Damit weist die Überrollschutzeinrichtung 30' insgesamt im Bereich jedes der Überrollschutzelemente 130, 132 eine von dem jeweiligen äußeren Ständer 32, 34 und dem entsprechenden inneren Ständer 122 bzw. 124 und der jeweiligen Querstrebe 126 bzw. 128 umschlossene Aussparung 134 bzw. 136 sowie eine zwischen den inneren Ständern 122, 124 der Überrollschutzelemente 130, 132 liegende Aussparung 138 auf, die nicht durch eine der Oberseite 36 der Fahrzeugkarosserie 10 gegenüberliegende Querstrebe abgeschlossen ist.

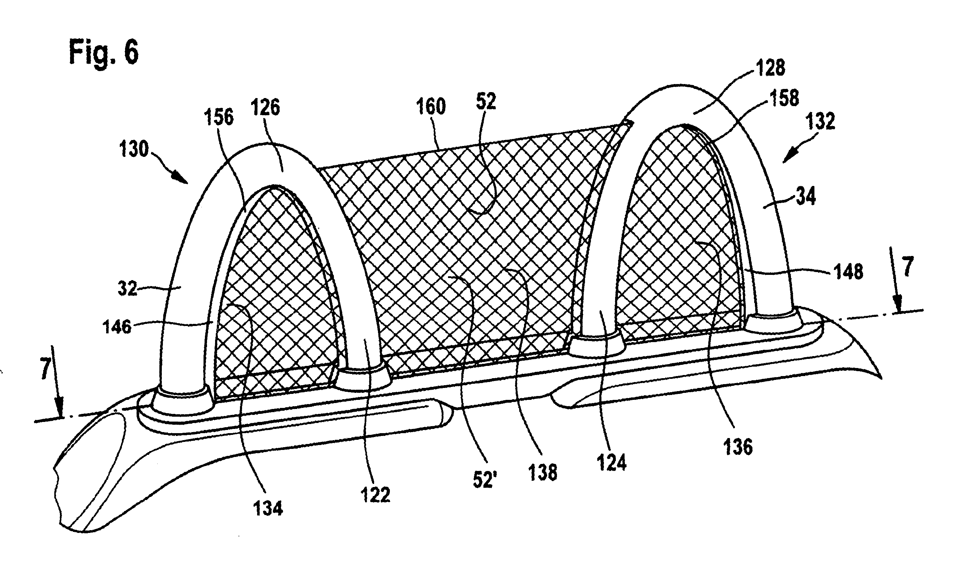

Wie in den Fig. 6 bis 8 dargestellt, sind alle Aussparungen 134, 136 und 138 der Überrollschutzeinrichtung 30' durch ein Flachmaterial 52 abdeckbar, wenn dieses in seiner Aktivposition steht.

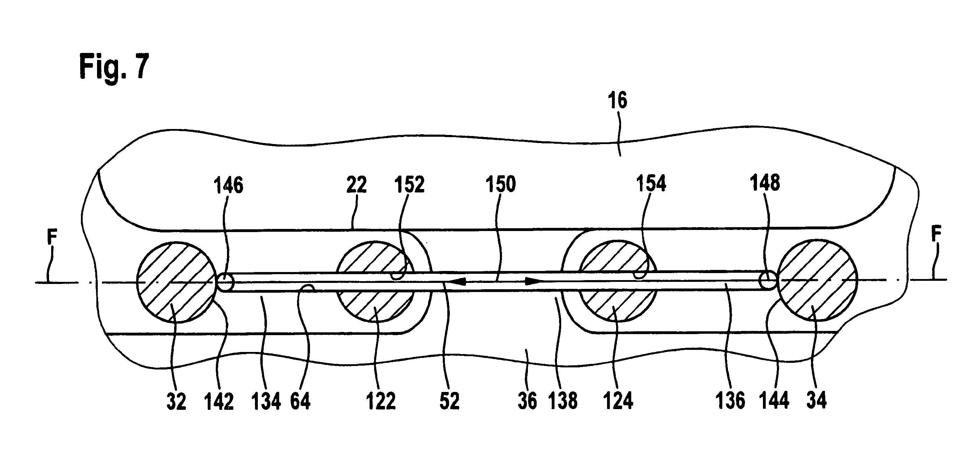

Hierzu wird das Flachmaterial 52, wie in Fig. 6 und 7 dargestellt, in der Aktivposition durch an den inneren Ständern 122, 124 zugewandten Innenseiten 142 und 144 der äußeren Ständer 32, 34 in der Aktivstellung anliegende Arme 146, 148 zwischen den äußeren Ständern 32 und 34 gespannt gehalten, wobei die inneren Ständer 122 und 124 hierzu mit diese in Querrichtung 150 zwischen den äußeren Ständern 32, 34 vollständig durchsetzenden Querdurchbrüchen 152, 154 versehen sind, die sich ausgehend von der Austrittsöffnung 64 in der Oberseite 36 der Fahrzeugkarosserie 10 bis zu den Querstreben 126, 128 erstrecken, so daß dadurch insgesamt die inneren Träger 122 und 124 zweigeteilt von der Austrittsöffnung 64 bis zu den Querstreben 126, 128 verlaufen und somit auch bei diesem Ausführungsbeispiel das Flachmaterial 52 in der Aktivposition in der Fläche F liegt, die sich quer zur Fahrzeuglängsrichtung 14 erstreckt und die äußeren Ständer 32 und 34 und bei diesem Ausführungsbeispiel auch noch die inneren Ständer 122 und 124 schneidet.

Die Arme 146 und 148 sind so ausgebildet, daß deren obere Enden 156, 158 in der Aktivstellung das Flachmaterial 52 so gespannt halten, daß eine Oberkante 160 des Flachmaterials 52 im wesentlichen gerade gespannt zwischen den Ständern 32 und 34 verläuft.

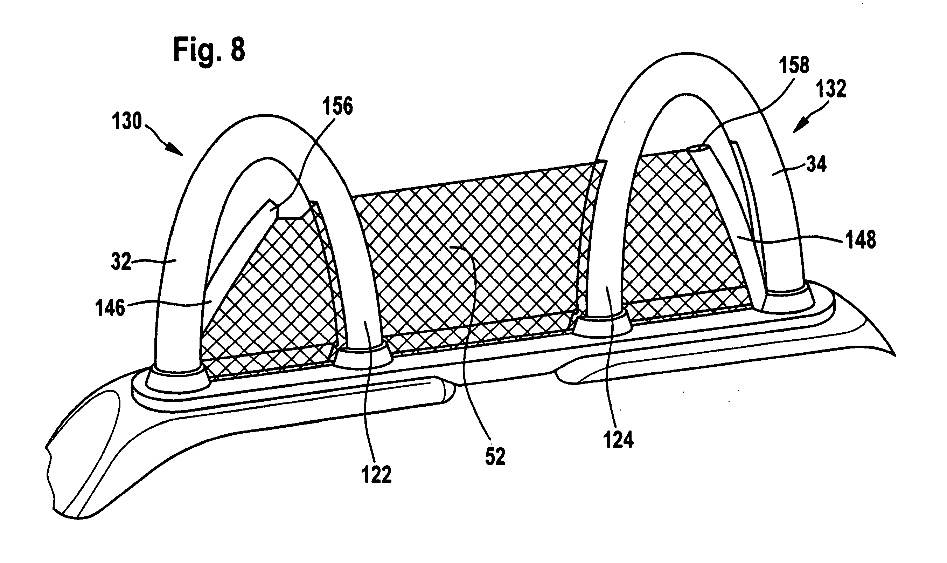

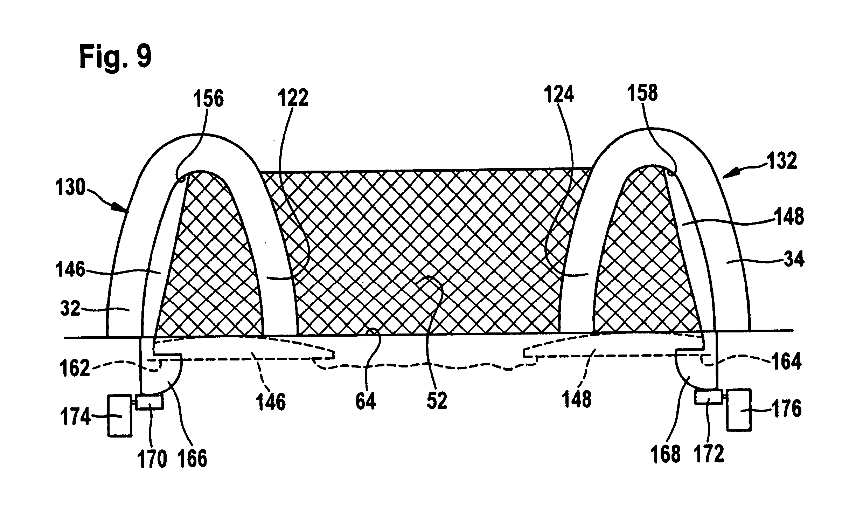

Wie in Fig. 8 und 9 dargestellt, sind die Arme 146 und 148 jeweils um ungefähr parallel zur Fahrzeuglängsrichtung 14 verlaufenden Schwenkachsen 162 und 164 schwenkbar gelagert, und zwar derart, daß deren Enden 156, 158 in Richtung der Austrittsöffnung 64 bewegbar und durch diese hindurchbewegbar sind, um die in Fig. 9 gestrichelt dargestellte Verstauposition der Arme 146, 148 zu erreichen, in denen diese nicht mehr über die Austrittsöffnung 64 überstehen, sondern innerhalb der Verstauaufnahme 62 liegen.

Dadurch wird zum Erreichen der Verstauposition auch das an den Armen 146 und 148 gehaltene Flachmaterial 52 durch die Austrittsöffnung 64 hindurch in die Verstauaufnahme 62 hineinbewegt und durch eine beispielsweise in der Verstauaufnahme 62 vorgesehene Einzugseinrichtung 90, beispielsweise ausgebildet als Aufwickeleinrichtung, zu einem Wickel 96 aufgewickelt, wie im Zusammenhang mit dem ersten Ausführungsbeispiel beschrieben.

Vorzugsweise hat bei diesem Ausführungsbeispiel die Auslaßöffnung 64 eine derartige Breite, daß die Arme 146, 148 durch diese hindurchbewegbar sind, wobei die Austrittsöffnung 64 beispielsweise durch elastische Lippen verschließbar ist.

Zum Verschwenken der Arme 146 und 148 sind diese vorzugsweise mit im Bereich der Verstauaufnahme 62 angeordneten Zahnradsegmenten 166 und 168 versehen, die zusammen mit den Armen 146 und 148 um die Schwenkachse 162 und 164 verschwenkbar sind und jeweils beispielsweise mit Antriebsschnecken 170 und 172 in Eingriff stehen, wobei die Antriebsschnecken 170 und 172 durch Antriebseinheiten 174 und 176 antreibbar sind, die entweder einzelne Elektromotoren darstellen oder miteinander gekoppelt durch einen Antriebsmotor antreibbar sind, um die Arme 146, 148 zwischen der Aktivstellung und der Verstaustellung und umgekehrt hin- und herzuschwenken.

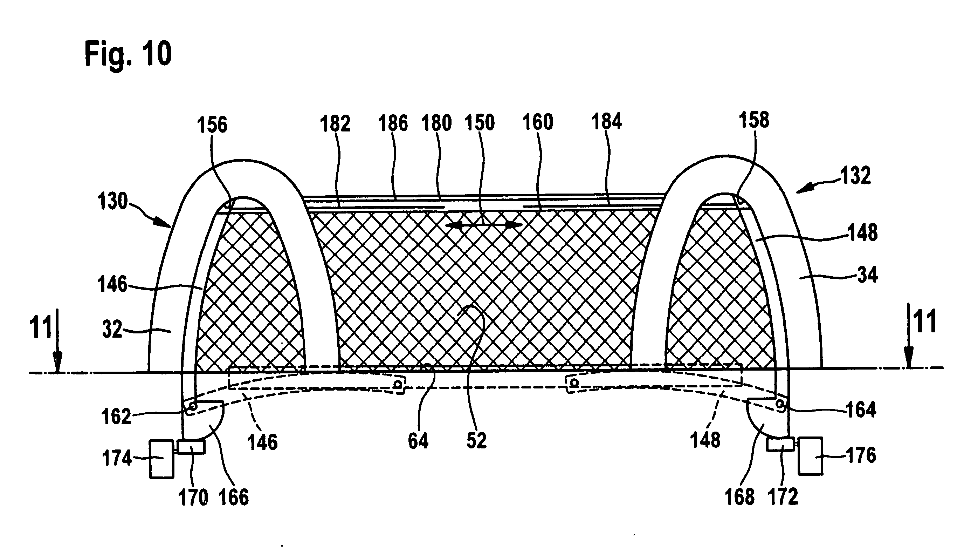

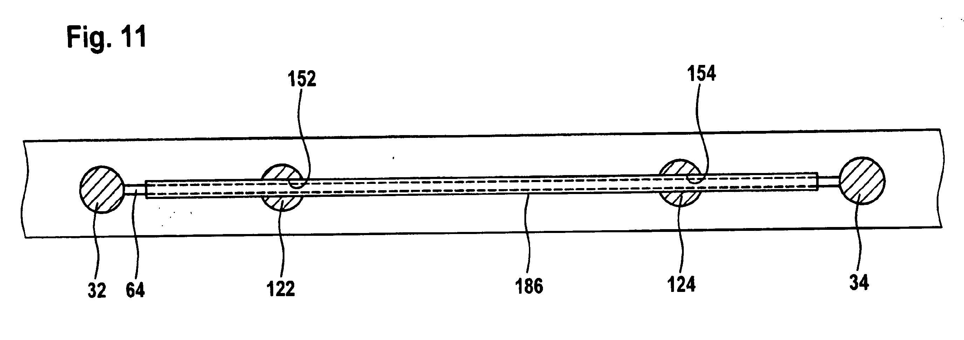

Ein drittes Ausführungsbeispiel der erfindungsgemäßen Lösung, dargestellt in Fig. 10 und 11 entspricht im Prinzip dem zweiten Ausführungsbeispiel, mit dem Unterschied, daß das Flachmaterial 52 im Bereich der Oberkante 160 durch eine Abschlußschiene 180 gehalten ist, die sich in der Querrichtung 150 zwischen den äußeren Ständern 132 und 134 erstreckt und an welcher die Arme 146, 148 mit ihren Enden 156, 158 angreifen, wobei die Enden 156 und 158 in an der Abschlußschiene 180 vorgesehenen Führungen 182, 184 längs der Abschlußschiene 180 bewegbar sind.

Ein Verschwenken der Arme 146 und 148 führt nun dazu, daß sich die gesamte Abschlußschiene 180 in Richtung der Austrittsöffnung 64 bewegen läßt, wobei die Enden 156, 158 der Arme 146 und 148 in den Führungen 182 und 184 sich bewegen und aufeinanderzu verlaufen. Dadurch läßt sich die Abschlußschiene 180 im wesentlichen parallel zur Austrittsöffnung 64 ausgerichtet auf diese zu bewegen.

Ferner ist die Abschlußschiene 180 auf ihrer der Fahrzeugkarosserie 10 abgewandten Seite mit einer Abdeckung 186 versehen, mit welcher in der Verstaustellung der Arme 146, 148 die Austrittsöffnung 64 abdeckbar ist.

In diesem Fall sind die Querdurchbrüche 152 und 154 der inneren Ständer 122 und 124 derart auszuführen, daß sich die Abschlußschiene 180 mitsamt der Abdeckung 186 und den an der Abschlußschiene 180 geführten Armen 146, 148 durch die Querdurchbrüche 152, 154 hindurchbewegen lassen.

Somit läßt sich durch die Abschlußschiene 180 insbesondere mit der Abdeckung 186 in einfacher Weise die Austrittsöffnung 64 verschließen, wenn die Arme 146, 148 innerhalb der Verstauaufnahme 62 in ihrer Verstauposition stehen.

Im übrigen lassen sich die Arme 146 und 148 in gleicher Weise wie beim zweiten Ausführungsbeispiel zum Verschwenken um die Schwenkachsen 162 und 164 antreiben.

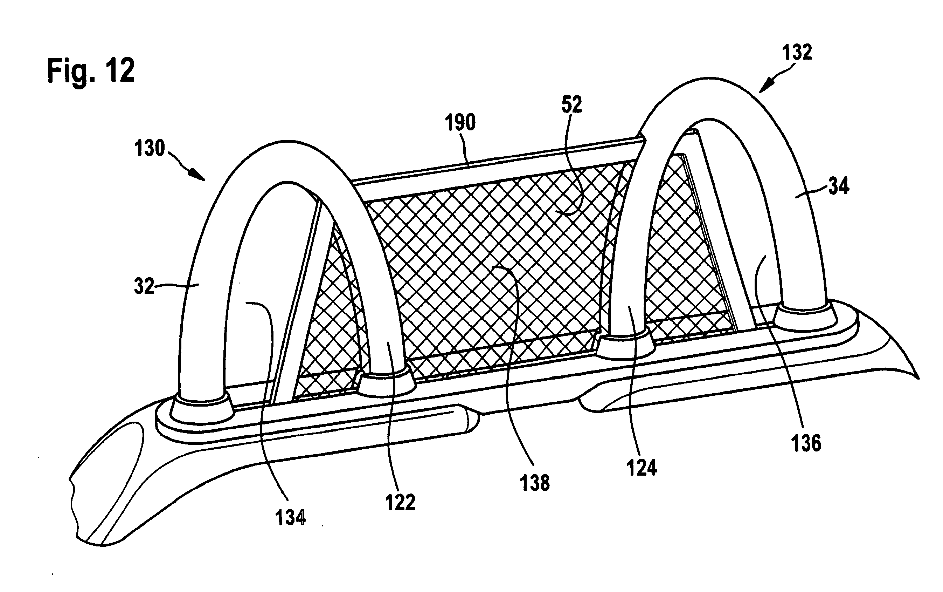

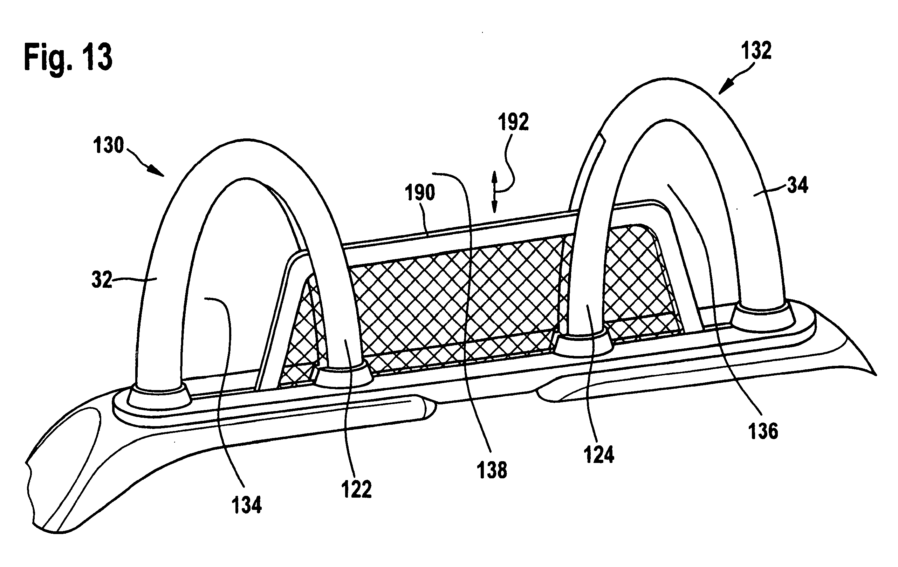

Bei einem vierten Ausführungsbeispiel, schematisch dargestellt in den Fig. 12 und 13, sind diejenigen Elemente, die mit den voranstehenden Ausführungsbeispielen identisch sind, mit denselben Bezugszeichen versehen, so daß hinsichtlich der Beschreibung derselben vollinhaltlich auf die Ausführungen zu den voranstehenden Ausführungsbeispielen Bezug genommen werden kann.

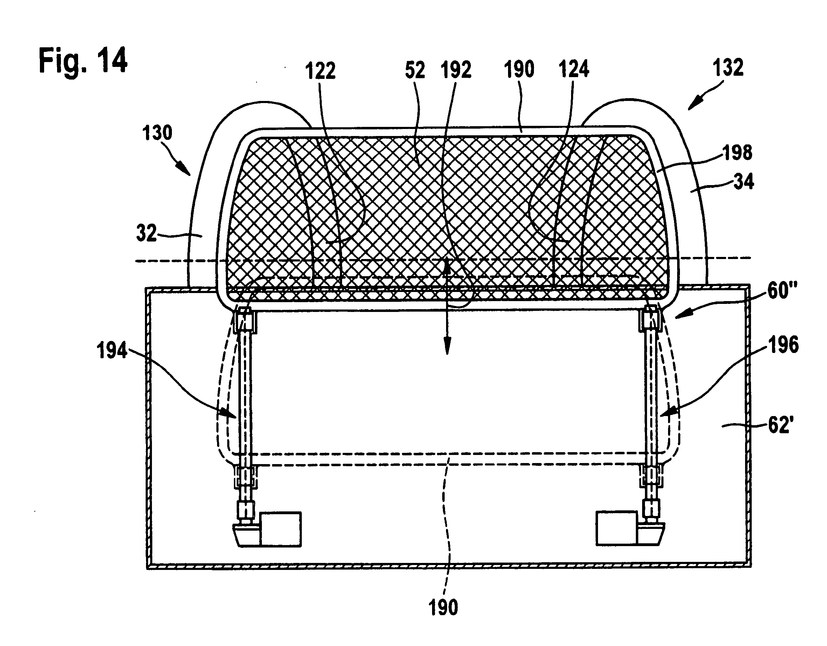

Bei dem vierten Ausführungsbeispiel ist im Gegensatz zu den voranstehenden Ausführungsbeispielen das Flachmaterial 52, wie schematisch in Fig. 14 dargestellt, in einem in sich steifen Rahmen 190 aufgespannt gehalten, welcher das Flachmaterial 52 halbseitig umschließt und undeformiert zwischen der in Fig. 14 durchgezogen dargestellten Aktivstellung in die in Fig. 14 gestrichelt dargestellte Verstaustellung und umgekehrt bewegbar ist.

Der Rahmen 190 ist dabei Teil der das Bewegen des Flachmaterials 52 erlaubenden Flachmaterialführungseinrichtung 60, die zusätzlich zum Rahmen 190 noch diesen in einer Verschieberichtung 192 bewegende Linearantriebe 194, 196 umfaßt, wie sie beispielsweise in der deutschen Patentanmeldung DE 199 02 242 A1 beschrieben sind.

Der Rahmen 190 kann, wie in Fig. 14 dargestellt, lediglich durch einen Außenrahmen 198 gebildet sein, welcher das Flachmaterial 52 außenseitig umschließt.

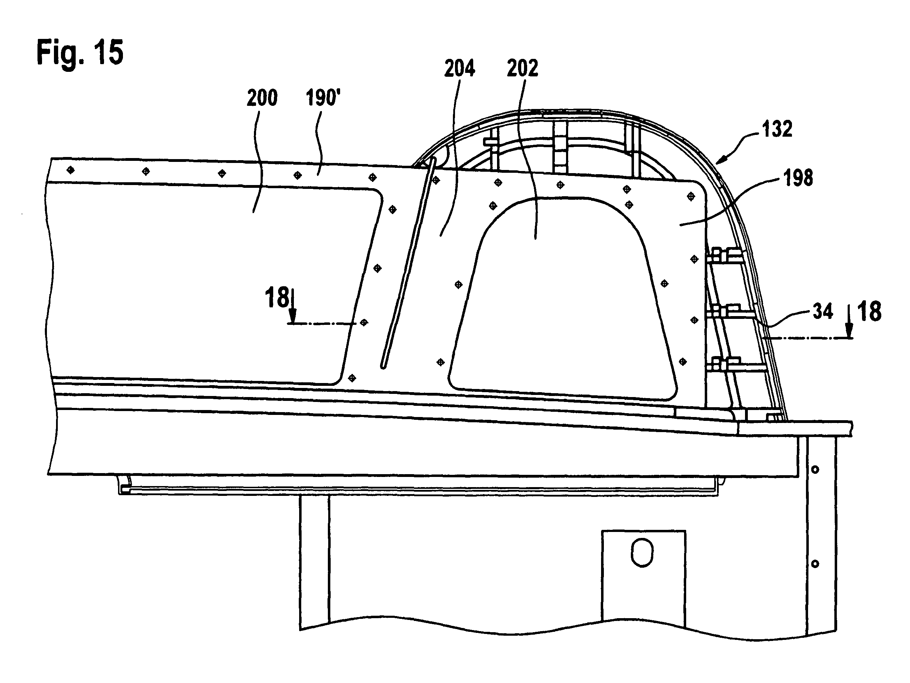

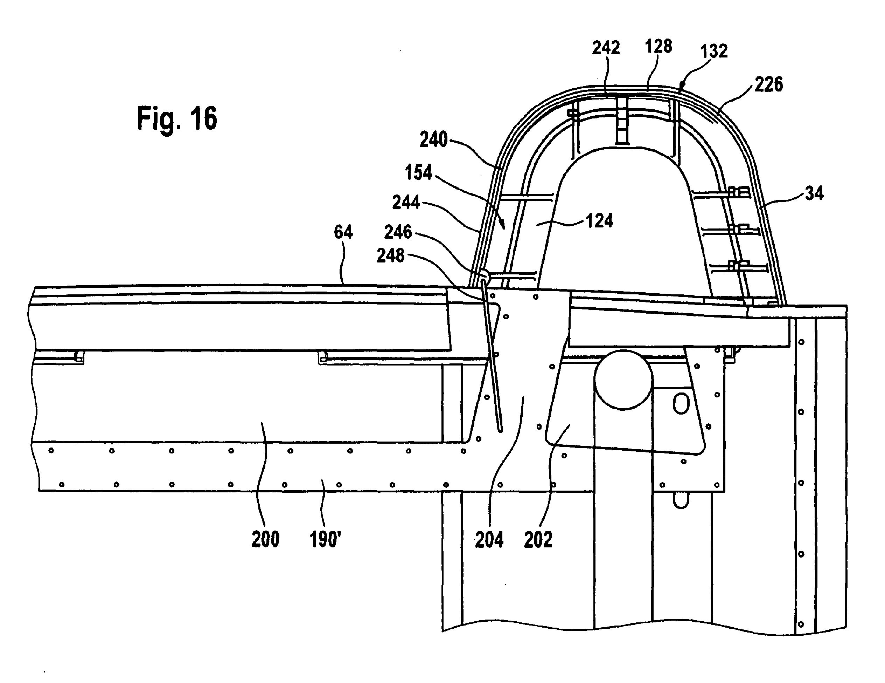

Bei einem fünften Ausführungsbeispiel, dargestellt in Fig. 15 und 16 ist vorgesehen, daß der Rahmen 190' mehrere Öffnungen aufweist, beispielsweise eine mittige Öffnung 200 und äußere Öffnungen 202, die dadurch entstehen, daß der Außenrahmen 198 durch Zwischenstege 204 zusätzlich unterteilt ist. Die äußeren Öffnungen 202 sind dabei so angeordnet, daß sie im Bereich der Aussparungen 134 und 136 der Überrollschutzelemente 130 und 132 liegen und die mittige Öffnung 200 ist so angeordnet, daß sie im Bereich der Aussparung 138 zwischen den Überrollschutzelementen 130 und 132 liegt.

Der Rahmen 190' ist vorzugsweise durch zwei Platten 210 und 212 gebildet, zwischen denen das Flachmaterial 52 eingeklemmt ist, so daß dieses die Öffnungen 200 und 202 des Rahmens 190' übergreift.

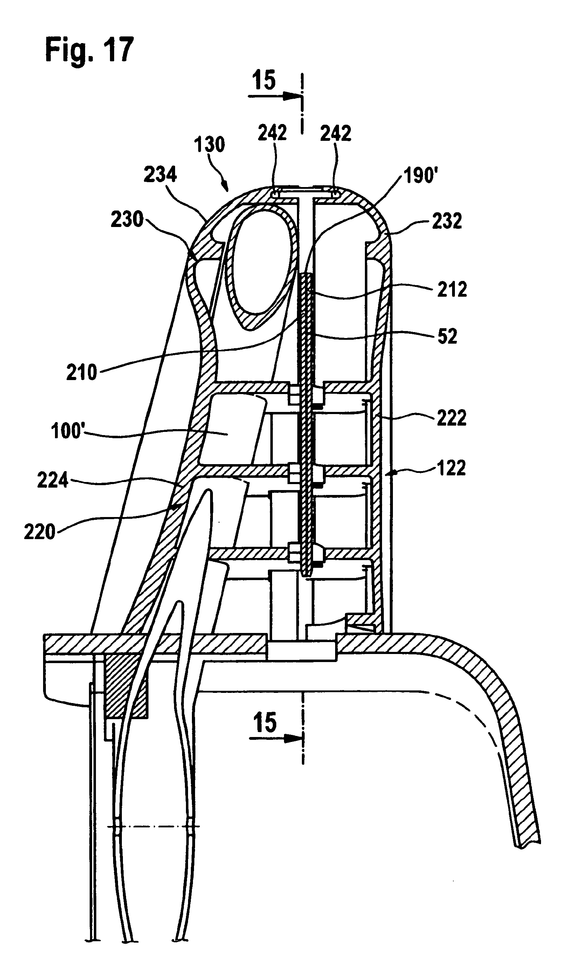

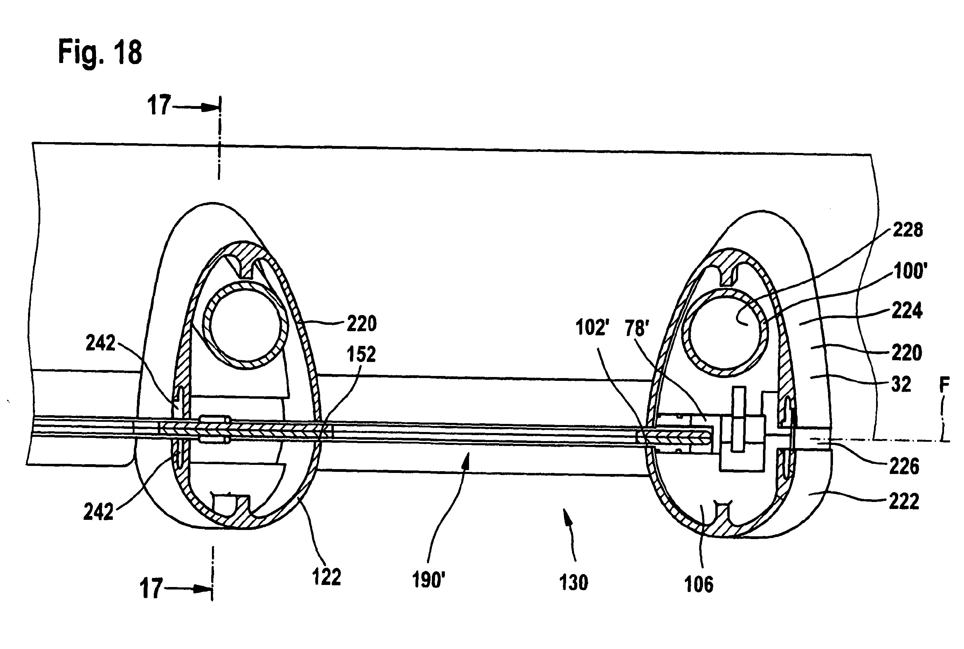

Bei dem fünften Ausführungsbeispiel sind außerdem, wie in den Fig. 17 und 18 dargestellt, die Überrollschutzelemente 130 und 132, exemplarisch dargestellt am Beispiel des Überrollschutzelements 130, so ausgebildet, daß eine Außenkontur der Ständer 32, 34, 122 und 124 sowie der Querstreben 126 und 128 nicht durch die Tragstruktur bestimmt ist.

Bei dem fünften Ausführungsbeispiel wird eine Außenkontur der Ständer 32, 34, 122, 124, exemplarisch dargestellt am Beispiel des Überrollschutzelements 130, durch ein Außengehäuse 220 gebildet, welches beispielsweise einen vorderen, in Fahrtrichtung 12 vor der Fläche F liegenden Gehäuseabschnitt 222 und einen hinteren, in Fahrtrichtung 12 hinter der Fläche F liegenden Gehäuseabschnitt 224 aufweist, die im Fall der äußeren Ständer 32, 34 den auf ihren einander zugewandten Seiten liegenden Durchbruch 102' bilden, über welchen beim fünften Ausführungsbeispiel der Rahmen 190' in den Innenraum 106' der äußeren Ständer 32, 34 eingreifen kann, um außenseitig in die im Innenraum 106' angeordnete Führungsschiene 78' einzugreifen. Ferner sind die Gehäuseabschnitte 222 und 224 auf den den Durchbrüchen 102' gegenüberliegenden Seiten der äußeren Ständer 32, 34 durch ein Verbindungselement 226 miteinander verbunden.

Im Fall der inneren Ständer 122, 124 ist zwischen den Gehäuseabschnitten 222 und 224 jeweils der Querdurchbruch 152 gebildet, so daß die Gehäuseabschnitte 222, 224 im Bereich der inneren Ständer 122, 124 nicht miteinander verbunden sind, sondern jeweils an den Querdurchbruch 152 angrenzen.

Die Tragstruktur 100' verläuft getrennt von dem Ständergehäuse 220 im Innenraum 106' desselben und ist völlig unabhängig von dem Ständergehäuse 220, das seinerseits nichts zur Stabilität der Tragstruktur 100' beiträgt. Vorzugsweise ist dabei die Tragstruktur 100' durch einen, im Innenraum 106' der Ständer 32, 34, 122, 124 verlaufenden und auch der Querstreben 126 und 128 verlaufenden umgekehrt U-förmigen Rohrbügel 228 gebildet.

Dabei geht das Ständergehäuse 220 einstückig in ein entsprechendes Querträgergehäuse 230 über, und der Innenraum 106' setzt sich durchgehend von dem Ständergehäuse 220 in dem Querträgergehäuse 230 fort, so daß der umgekehrte U-förmige Rohrbügel 228 als zusammenhängendes Teil in dem Innenraum 106' verlaufen kann, wobei das einstückig mit den Ständergehäusen 220 verbundene Querträgergehäuse 230 ebenfalls durch einen vorderen Gehäuseabschnitt 232 und einen hinteren Gehäuseabschnitt 234 gebildet wird, die beide einstückig an die entsprechenden Gehäuseabschnitte 222, 224 des Ständergehäuses 220 angeformt sind.

Um die Querdurchbrüche 152 und 154 zu verschließen, ist, wie in Fig. 15 und 16 am Beispiel des Überrollschutzelements 132 dargestellt, zwischen den Gehäuseabschnitten 222 und 224 eine flexible Abdeckleiste 240 in längs einer Außenkontur der Gehäuseabschnitte 222 und 232 sowie 224 und 234 verlaufenden Führungen 242 verschieblich geführt ist, wobei die Führungen 242 auf einer den Innenraum 106' zugewandten Innenseite des zwischen den Gehäuseabschnitten 222, 232 und 224, 234 im Bereich der äußeren Ständer 32, 34 und der Querstreben 126, 128 vorgesehenen Verbindungselements 226 verlaufen, so daß die Abdeckleiste 240 in der Aktivposition des Flachmaterials 52 auf der Innenseite des Verbindungselements 226 im Innenraum 106' liegt und in der Verstauposition des Flachmaterials 52 die Querdurchbrüche 152, 154 im Bereich von einander zugewandten Seiten 244 der inneren Ständer 122, 124 verschließt.

Hierzu ist die Abdeckleiste 240 an ihrem dem Rahmen 190' zugewandten Ende mit einem Lagerkopf 246 versehen, in welchen eine Betätigungsstange 248 eingreift, die ihrerseits an dem Zwischensteg 204 des Rahmens 190' angreift, und zwar in einem dem Führungskopf 246 abgewandten Bereich, wobei die Führungsstange 248 somit im Innenraum 106' des Ständergehäuses 220 des inneren Ständers 122, 124 verläuft.

Wird der Rahmen 190' in die Aktivstellung verschoben, so wird die flexible Abdeckleiste 240 über die Führungen 242 auf die Innenseite des Verbindungselements 226 in den Innenraum 106' des Querstrebengehäuses 230 und des Ständergehäuses 220 des äußeren Ständers 32 geschoben und der Rahmen 190' kann sich in den entsprechenden Querdurchbruch 152, 154 hineinbewegen.

Wird der Rahmen 190' von der Aktivstellung in die Verstaustellung verschoben, so zieht die Betätigungsstange 248 an dem Lagerkopf 246 der flexiblen Abdeckleiste 240 und zieht diese in den Führungen 242 in Richtung der Austrittsöffnung 64, so daß dadurch der Querdurchbruch 152, 154 an der jeweiligen Innenseite 244 des entsprechenden inneren Ständers 122, 124 verschlossen wird.

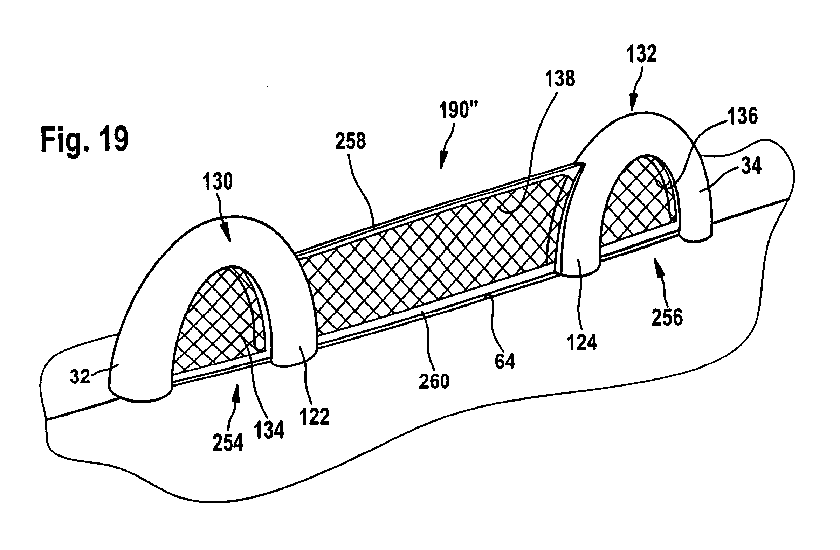

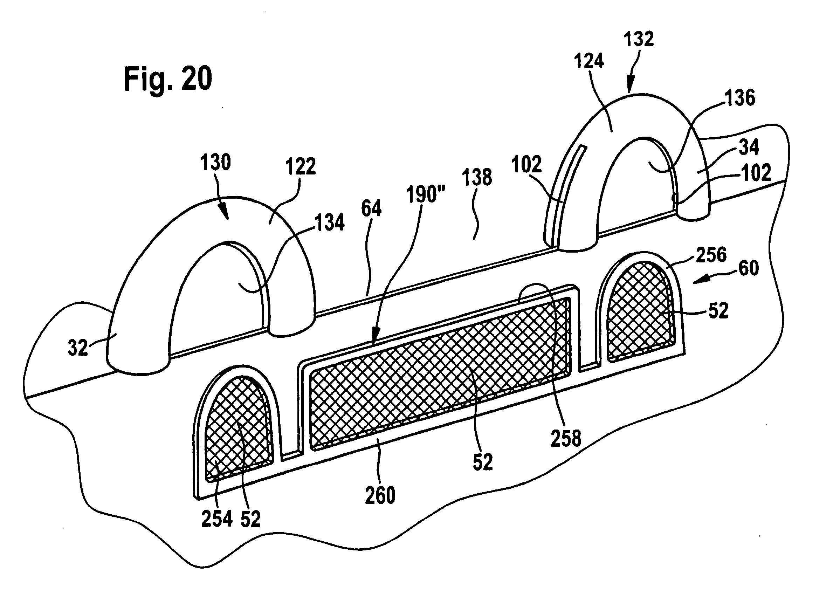

Bei einem sechsten Ausführungsbeispiel, dargestellt in den Figuren 19 und 20, sind diejenigen Elemente, die mit denen der voranstehenden Ausführungsbeispiele identisch sind, mit denselben Bezugszeichen versehen, so daß zur Beschreibung derselben vollinhaltlich auf die Ausführungen zu den voranstehenden Ausführungsbeispielen Bezug genommen werden kann.

Im Gegensatz zu dem fünften Ausführungsbeispiel ist der Rahmen 190" so ausgebildet, daß er insgesamt drei Teilrahmen, nämlich die Teilrahmen 254 und 256 aufweist, die in die Aussparungen 134 und 136 hinein bewegbar sind, um diese windhindernd zu verschließen, sowie den Teilrahmen 258, welcher dazu vorgesehen ist, die Aussparung 138 zwischen den Überrollschutzelementen 130 und 132 zu verschließen.

Die Teilrahmen 254, 256 und 258 sitzen dabei auf einem gemeinsamen Träger 260, welcher durch Linearantriebe 194 und 196, wie sie beispielsweise bei dem vierten Ausführungsbeispiel beschrieben sind, bewegbar ist, um den gesamten Rahmen 190" von der in Fig. 19 dargestellten Aktivposition in die in Fig. 20 dargestellte Verstauposition und umgekehrt zu bewegen.

Jeder dieser Teilrahmen 254, 256, 258 spannt dabei ein für diesen Teilrahmen vorgesehenes Flachmaterialstück 52 auf, welches in gleicher Weise wie bei den voranstehend beschriebenen Ausführungsbeispielen ausgebildet ist.

Das sechste Ausführungsbeispiel ist dabei vorzugsweise so ausgebildet, daß die äußeren Ständer 32, 34 sowie die inneren Ständer 122, 124 mit Aufnahmen für die Flachmaterialführungseinrichtung 60, beispielsweise mit in den jeweiligen Innenraum führenden Durchbrüchen 102, versehen sind, welche dazu dienen, die Teilrahmen 254, 256 und 258 in der Aktivposition relativ zu den Ständern 32, 34, 122, 124 zu führen und in ihrer Position zu halten.

Es ist aber auch denkbar, den Rahmen 190" mit einer derartigen Stabilität zu versehen, daß insbesondere der Träger 260 die Teilrahmen 254, 256 und 258 derart exakt positioniert, daß Durchbrüche 102 in allen Ständern 32, 34, 122, 124 nicht erforderlich sind, sondern nur bei einem Teil der Ständer, beispielsweise bei den inneren Ständern 122, 124.

Bei dem sechsten Ausführungsbeispiel ist es somit nicht zwingend notwendig, daß die inneren Ständer 122, 124 mit Querdurchbrüchen versehen sind. Vielmehr ist es ausreichend, jeweils den Aussparungen 134, 136 und 138 zugewandt angeordnete Durchbrüche 102 vorzusehen, die jedoch nicht die inneren Ständer 122 und 124 vollständig in der Querrichtung durchsetzen.

Bei einer weiteren Variante ist es sogar denkbar, dem Rahmen 190" eine derartige Stabilität zu geben, daß in keinem der Ständer 32, 34, 122, 124 ein Durchbruch 102 zur Fixierung der Teilrahmen 254, 256, 258 in der Aktivposition erforderlich ist. Beispielsweise wäre es ausreichend, die Teilrahmen 254, 256 und 258 lediglich an den Überrollschutzelementen 130, 132 reibschlüssig anzulegen.

Im übrigen wird hinsichtlich weiterer Details vollinhaltlich auf die Ausführungen zu den voranstehenden Ausführungsbeispielen Bezug genommen.

## Patentansprüche

1. Cabriofahrzeug umfassend eine Fahrzeugkarosserie (10) mit einem Fahrgastraum (16), mindestens eine in dem Fahrgastraum (16) angeordnete Sitzreihe (18), eine hinter der mindestens einen Sitzreihe (16) angeordnete und eine einem Heck (42) der Fahrzeugkarosserie (10) zugewandte Aussparung (40, 134, 136, 138) aufweisende Überrollschutzeinrichtung (30) mit mindestens zwei quer zu einer Längsrichtung (14) der Fahrzeugkarosserie (10) im Abstand voneinander angeordneten und sich über die Fahrzeugkarosserie (10) erhebenden Ständern (32, 34, 122, 124) und mit mindestens einer sich zwischen mindestens zwei Ständern (32, 34, 122, 124) erstreckenden Querstrebe (38, 126, 128), und eine hinter der mindestens einen Sitzreihe (18) angeordnete Windschotteinrichtung (50), welche einen Luftstrom durch die mindestens eine Aussparung (40, 134, 136, 138) der Überrollschutzeinrichtung (30) redu-ziert, und welche eine Flachmaterialführungseinrichtung (60) und ein von der Flachmaterialführungseinrichtung (60) gehaltenes windabweisendes Flachmaterial (52) aufweist,
**dadurch gekennzeichnet, dass** die Flachmaterialführungseinrichtung (60) das windabweisende Flachmaterial (52) in einer Aktivposition in einer die Ständer (32, 34, 122, 124) schneidenden Fläche (F) hält und dabei die mindestens eine Aussparung (40, 134, 136, 138) windhindernd verschließt, und dass das windabweisende Flachmaterial (52) mittels der Flachmaterialführungseinrichtung (60) von der Aktivposition in eine in der Fahrzeugkarosserie (10) liegende Verstauposition, in welche das windabweisende Flachmaterial (52) die Aussparung (40, 134, 136, 138) freigibt, bringbar ist und umgekehrt.

2. Cabriofahrzeug nach Anspruch 1, **dadurch gekennzeichnet, daß** die Flachmaterialführungseinrichtung (60) mit einem Antrieb (82, 174, 176, 194, 196) versehen ist, um das windabweisende Flachmaterial (52) zwischen der Aktivposition und der Verstauposition und umgekehrt zu bewegen.

3. Cabriofahrzeug nach Anspruch 1 oder 2, **dadurch gekennzeichnet, daß** in der Fahrzeugkarosserie (10) eine an die Überrollschutzeinrichtung (30) angrenzend angeordnete Verstauaufnahme (62) zur Aufnahme des windabweisenden Flachmaterials (52) in der Verstauposition vorgesehen ist.

4. Cabriofahrzeug nach Anspruch 3, **dadurch gekennzeichnet, daß** die Verstauaufnahme (62) eine der Überrollschutzeinrichtung (30) zugewandte Austrittsöffnung (64) für das windabweisende Flachmaterial aufweist.

5. Cabriofahrzeug nach Anspruch 4, **dadurch gekennzeichnet, daß** die Fläche (F), in welcher sich das windabweisende Flachmaterial (52) in der Aktivposition erstreckt, die Austrittsöffnung (64) durchsetzt.

6. Cabriofahrzeug nach Anspruch 4 oder 5, **dadurch gekennzeichnet, daß** die Flachmaterialführungseinrichtung (60) ein Verschlußelement (186) für die Austrittsöffnung (64) umfaßt.

7. Cabriofahrzeug nach einem der voranstehenden Ansprüche, **dadurch gekennzeichnet, daß** das windabweisende Flachmaterial (52) biegeschlaff ist.

8. Cabriofahrzeug nach Anspruch 7, **dadurch gekennzeichnet, daß** die Flachmaterialführungseinrichtung (60) eine Aufspannvorrichtung (66) umfaßt, mit welcher das windabweisende Flachmaterial (52) in der Aktivposition über die Aussparung (40, 134, 136, 138) hinweg aufspannbar ist.

9. Cabriofahrzeug nach Anspruch 8, **dadurch gekennzeichnet, daß** die Aufspannvorrichtung (66) einen in einer Führung (70) bewegbaren und das windabweisende Flachmaterial (52) in einer Querrichtung gespannt haltenden Bügel (68) umfaßt.

10. Cabriofahrzeug nach Anspruch 9, **dadurch gekennzeichnet, daß** die Aufspannvorrichtung (66') zwei zwischen einer Aktivstellung und einer Verstaustellung verschwenkbare Arme (146, 148) aufweist, welche in der Aktivstellung das windabweisende Flachmaterial (52) in der Querrichtung gespannt halten.

11. Cabriofahrzeug nach Anspruch 10, **dadurch gekennzeichnet, daß** die Arme (146, 148) nahe den die jeweilige mindestens eine Aussparung (40, 134, 136, 138) außenseitig begrenzenden Ständern (32, 34) schwenkbar gelagert sind und in der Aktivstellung sich ungefähr parallel zu diesen erstrecken.

12. Cabriofahrzeug nach Anspruch 10 oder 11, **dadurch gekennzeichnet, daß** die Arme (146, 148) in der Verstaustellung sich quer zu den Ständern (32, 34) erstrecken.

13. Cabriofahrzeug nach einem der Ansprüche 8 bis 12, **dadurch gekennzeichnet, daß** die Flachmaterialführungseinrichtung (60) eine in der Fahrzeugkarosserie (10) angeordnete Einzugseinrichtung (90) zum Bewegen des windabweisenden Flachmaterials (52) in die Verstauposition umfaßt.

14. Cabriofahrzeug nach Anspruch 13, **dadurch gekennzeichnet, daß** die Einzugseinrichtung (90) eine Aufwickeleinrichtung (92, 94) für das windabweisende Flachmaterial (52) umfaßt.

15. Cabriofahrzeug nach einem der Ansprüche 1 bis 8, **dadurch gekennzeichnet, daß** die Flachmaterialführungseinrichtung (60) einen das windabweisende Flachmaterial (52) aufnehmenden Rahmen (190) und eine Verschiebeeinrichtung (194, 196) für die Bewegung des Rahmens zwischen einer Verstaustellung und einer Aktivstellung umfaßt.

16. Cabriofahrzeug nach Anspruch 15, **dadurch gekennzeichnet, daß** durch die Verschiebeeinrichtung (194, 196) der Rahmen (190) in der Verstaustellung in der Fahrzeugkarosserie (10) versenkt angeordnet ist.

17. Cabriofahrzeug nach Anspruch 16, **dadurch gekennzeichnet, daß** der Rahmen (190) in der Verstaustellung in einer sich quer zur Längsrichtung (14) der Fahrzeugkarosserie (10) erstreckenden Fläche (F) liegt.

18. Cabriofahrzeug nach einem der Ansprüche 15 bis 17, **dadurch gekennzeichnet, daß** die Flachmaterialführungseinrichtung (60) einen einteiligen Rahmen (190, 190') zum Halten des Flachmaterials (52) aufweist.

19. Cabriofahrzeug nach Anspruch 18, **dadurch gekennzeichnet, daß** der Rahmen (190, 190') in der Aktivstellung der Flachmaterialführungseinrichtung (60) das Flachmaterial (52) in allen Aussparungen (40, 134, 136, 138) windhindernd positioniert.

20. Cabriofahrzeug nach einem der Ansprüche 15 bis 17, **dadurch gekennzeichnet, daß** die Flachmaterialführungseinrichtung (60) einen mehrteiligen Rahmen (190") aufweist.

21. Cabriofahrzeug nach Anspruch 20, **dadurch gekennzeichnet, daß** der mehrteilige Rahmen (190") mehrere, durch einen gemeinsamen Träger (260) gehaltene Teilrahmen (254, 256, 258) umfaßt.

22. Cabriofahrzeug nach einem der voranstehenden Ansprüche, **dadurch gekennzeichnet, daß** die Überrollschutzeinrichtung (30) zwei jeweils Längsseiten der Fahrzeugkarosserie (10) zugewandt angeordnete und durch die Querstrebe (38) verbundene äußere Ständer (32, 34) umfaßt.

23. Cabriofahrzeug nach Anspruch 22, **dadurch gekennzeichnet, daß** die Überrollschutzeinrichtung (30) eine von den äußeren Ständern (32, 34) und der Querstrebe (38) umschlossene Aussparung (40) aufweist.

24. Cabriofahrzeug nach einem der Ansprüche 1 bis 21, **dadurch gekennzeichnet, daß** die Überrollschutzeinrichtung (30') zwei Überrollschutzelemente (130, 132) umfaßt, von denen jedes zwei Ständer (32, 122, 34, 124) und eine Querstrebe (126, 128) aufweist.

25. Cabriofahrzeug nach Anspruch 24, **dadurch gekennzeichnet, daß** jedes der Überrollschutzelemente (130, 132) einen äußeren, der jeweiligen Längsseite der Fahrzeugkarosserie (10) zugewandt angeordneten Ständer (32, 34) und einen inneren Ständer (122, 124) aufweisen.

26. Cabriofahrzeug nach Anspruch 24 oder 25, **dadurch gekennzeichnet, daß** eine (138) der Aussparungen (134, 136, 138) der Überrollschutzeinrichtung (30') zwischen den Überrollschutzelementen (130, 132) liegt.

27. Cabriofahrzeug nach einem der Ansprüche 24 bis 26, **dadurch gekennzeichnet, daß** jedes der Überrollschutzelemente (130, 132) eine weitere, von den Ständern (32, 122, 34, 124) und den Querstreben (126, 128) umgebene Aussparung (134, 136) aufweist.

28. Cabriofahrzeug nach einem der voranstehenden Ansprüche, **dadurch gekennzeichnet, daß** mindestens zwei der Ständer (32, 34, 122, 124) mindestens eine Aufnahme (102, 106, 152, 154) für die Flachmaterialführungseinrichtung (60) aufweisen.

29. Cabriofahrzeug nach Anspruch 28, **dadurch gekennzeichnet, daß** die äußeren Ständer jeweils eine Aufnahme (102, 106) aufweisen.

30. Cabriofahrzeug nach Anspruch 28 oder 29, **dadurch gekennzeichnet, daß** mindestens ein innerer Ständer (122, 124) mindestens eine Aufnahme (102) aufweist.

31. Cabriofahrzeug nach einem der Ansprüche 28 bis 30, **dadurch gekennzeichnet, daß** mindestens einer der inneren Ständer (122, 124) von dem in der Aktivposition stehenden windabweisenden Flachmaterial (52) durchsetzt ist.

32. Cabriofahrzeug nach Anspruch 31, **dadurch gekennzeichnet, daß** die inneren Ständer mit Querdurchbrüchen (152, 154) versehen sind, welche von dem in der Aktivposition stehenden windabweisenden Flachmaterial (52) durchsetzt sind.

33. Cabriofahrzeug nach einem der voranstehenden Ansprüche, **dadurch gekennzeichnet, daß** die Ständer (32, 34, 122, 124) ein eine Tragstruktur (100) bildendes Außengehäuse aufweisen.

34. Cabriofahrzeug nach einem der voranstehenden Ansprüche, **dadurch gekennzeichnet, daß** die Querstreben (38, 126, 128) ein die Tragstruktur (100) bildendes Außengehäuse aufweisen.

35. Cabriofahrzeug nach einem der Ansprüche 1 bis 32, **dadurch gekennzeichnet, daß** die Ständer (32, 34) ein Ständergehäuse (220) und eine im Ständergehäuse verlaufende Tragstruktur (228) aufweisen.

36. Cabriofahrzeug nach einem der Ansprüche 1 bis 33, **dadurch gekennzeichnet, daß** die mindestens eine Querstrebe ein Querstrebengehäuse (230) und eine im Querstrebengehäuse verlaufende Tragstruktur (228) aufweist.

37. Cabriofahrzeug nach Anspruch 35 oder 36, **dadurch gekennzeichnet, daß** die Tragstruktur (228) auf einer Seite der Fläche (F) angeordnet ist, in welcher sich das windabweisende Flachmaterial (52) in der Aktivposition erstreckt.

38. Cabriofahrzeug nach Anspruch 37, **dadurch gekennzeichnet, daß** die Tragstruktur (228) der Querstrebe (126, 128) auf der selben Seite der Fläche (F) angeordnet ist, wie die Tragstruktur (228) der Ständer (32, 34, 122, 124).

## Claims

1. Convertible vehicle comprising a vehicle body (10) with a passenger compartment (16), at least one row of seats (18) arranged in the passenger compartment (16), a rollover protection device (30) arranged behind the at least one row of seats (16) and having a free space (40, 134, 136, 138) facing a rear (42) of the vehicle body (10), said protection device having at least two uprights (32, 34, 122, 124) arranged transversely to a longitudinal direction (14) of the vehicle body (10) at a distance from one another and rising above the vehicle body (10) and at least one cross bar (38, 126, 128) extending between at least two uprights (32, 34, 122, 124), and a wind stop device (50) arranged behind the at least one row of seats (18), said device reducing a flow of air through the at least one free space (40, 134, 136, 138) of the rollover protection device (30) and having a flat material guiding device (60) and a wind-deflecting flat material (52) held by the flat material guiding device (60),
**characterized in that** in an active position the flat material guiding device (60) holds the wind-deflecting flat material (52) in a surface (F) intersecting the uprights (32, 34, 122, 124) and thereby closes the at least one free space (40, 134, 136, 138) in a wind inhibiting manner, and that the wind-deflecting flat material (52) is adapted to be brought by means of the flat material guiding device (60) from the active position into a stowing position located in the vehicle body (10) and vice versa, the wind-deflecting flat material (52) releasing the free space (40, 134, 136, 138) in said stowing position.

2. Convertible vehicle as defined in claim 1, **characterized in that** the flat material guiding device (60) is provided with a drive (82, 174, 176, 194, 196) in order to move the wind-deflecting flat material (52) between the active position and the stowing position and vice versa.

3. Convertible vehicle as defined in claim 1 or 2, **characterized in that** a stowing receptacle (62) for accommodating the wind-deflecting flat material (52) in the stowing position is provided in the vehicle body (10), said receptacle being arranged adjacent to the rollover protection device (30).

4. Convertible vehicle as defined in claim 3, **characterized in that** the stowing receptacle (62) has an exit opening (64) for the wind-deflecting flat material facing the rollover protection device (30).

5. Convertible vehicle as defined in claim 4, **characterized in that** the surface (F), in which the wind-deflecting flat material (52) extends in the active position, passes through the exit opening (64).

6. Convertible vehicle as defined in claim 4 or 5, **characterized in that** the flat material guiding device (60) comprises a closure element (186) for the exit opening (64).

7. Convertible vehicle as defined in any one of the preceding claims, **characterized in that** the wind-deflecting flat material (52) is a slack material not resistant to bending.

8. Convertible vehicle as defined in claim 7, **characterized in that** the flat material guiding device (60) comprises a tensioning device (66) for tensioning the wind-deflecting flat material (52) over the free space (40, 134, 136, 138) in the active position.

9. Convertible vehicle as defined in claim 8, **characterized in that** the tensioning device (66) comprises a bracket (68) movable in a guide (70) and keeping the wind-deflecting flat material (52) tensioned in a transverse direction.

10. Convertible vehicle as defined in claim 9, **characterized in that** the tensioning device (66') has two arms (146, 148) pivotable between an active position and a stowing position, said arms keeping the wind-deflecting flat material (52) tensioned in the transverse direction in the active position.

11. Convertible vehicle as defined in claim 10, **characterized in that** the arms (146, 148) are mounted so as to be pivotable close to the uprights (32, 34) limiting the respective, at least one free space (40, 134, 136, 138) on the outer side, said arms extending approximately parallel to the uprights in the active position.

12. Convertible vehicle as defined in claim 10 or 11, **characterized in that** the arms (146, 148) extend transversely to the uprights (32, 34) in the stowing position.

13. Convertible vehicle as defined in any one of claims 8 to 12, **characterized in that** the flat material guiding device (60) comprises a drawing-in device (90) arranged in the vehicle body (10) for moving the wind-deflecting flat material (52) into the stowing position.

14. Convertible vehicle as defined in claim 13, **characterized in that** the drawing-in device (90) comprises a winding device (92, 94) for the wind-deflecting flat material (52).

15. Convertible vehicle as defined in any one of claims 1 to 8, **characterized in that** the flat material guiding device (60) comprises a frame (190) accommodating the wind-deflecting flat material (52) and a displacing device (194, 196) for the movement of the frame between a stowing position and an active position.

16. Convertible vehicle as defined in claim 15, **characterized in that** the frame (190) is arranged in the stowing position so as to dip into the vehicle body (10) due to the displacing device (194, 196).

17. Convertible vehicle as defined in claim 16, **characterized in that** in the stowing position the frame (190) is located in a surface (F) extending transversely to the longitudinal direction (14) of the vehicle body (10).

18. Convertible vehicle as defined in any one of claims 15 to 17, **characterized in that** the flat material guiding device (60) has a one-part frame (190, 190') for holding the flat material (52).

19. Convertible vehicle as defined in claim 18, **characterized in that** the frame (190, 190') positions the flat material (52) in all the free spaces (40, 134, 136, 138) so as to be wind inhibiting in the active position of the flat material guiding device (60).

20. Convertible vehicle as defined in any one of claims 15 to 17, **characterized in that** the flat material guiding device (60) has a multipart frame (190").

21. Convertible vehicle as defined in claim 20, **characterized in that** the multipart frame (190") comprises several partial frames (254, 256, 258) held by a common support (260).

22. Convertible vehicle as defined in any one of the preceding claims, **characterized in that** the rollover protection device (30) comprises two outer uprights (32, 34) connected by the cross bar (38) and arranged so as to face respective longitudinal sides of the vehicle body (10).

23. Convertible vehicle as defined in claim 22, **characterized in that** the rollover protection device (30) has a free space (40) enclosed by the outer uprights (32, 34) and the cross bar (38).

24. Convertible vehicle as defined in any one of claims 1 to 21, **characterized in that** the rollover protection device (30') comprises two rollover protection elements (130, 132), each of said elements having two uprights (32, 122, 34, 124) and a cross bar (126, 128).

25. Convertible vehicle as defined in claim 24, **characterized in that** each of the rollover protection elements (130, 132) has an outer upright (32, 34) arranged so as to face the respective longitudinal side of the vehicle body (10) and an inner upright (122, 124).

26. Convertible vehicle as defined in claim 24 or 25, **characterized in that** one (138) of the free spaces (134, 136, 138) of the rollover protection device (30') is located between the rollover protection elements (130, 132).

27. Convertible vehicle as defined in any one of claims 24 to 26, **characterized in that** each of the rollover protection elements (130, 132) has an additional free space (134, 136) surrounded by the uprights (32, 122, 34, 124) and the cross bars (126, 128).

28. Convertible vehicle as defined in any one of the preceding claims, **characterized in that** at least two of the uprights (32, 34, 122, 124) have at least one receptacle (102, 106, 152, 154) for the flat material guiding device (60).

29. Convertible vehicle as defined in claim 28, **characterized in that** the outer uprights each have a receptacle (102, 106).

30. Convertible vehicle as defined in claim 28 or 29, **characterized in that** at least one inner upright (122, 124) has at least one receptacle (102).

31. Convertible vehicle as defined in any one of claims 28 to 30, **characterized in that** at least one of the inner uprights (122, 124) has the wind-deflecting flat material (52) located in the active position passing through it.

32. Convertible vehicle as defined in claim 31, **characterized in that** the inner uprights are provided with transverse openings (152, 154), said openings having the wind-deflecting flat material (52) located in the active position passing through them.

33. Convertible vehicle as defined in any one of the preceding claims, **characterized in that** the uprights (32, 34, 122, 124) have an outer housing forming a support structure (100).

34. Convertible vehicle as defined in any one of the preceding claims, **characterized in that** the cross bars (38, 126, 128) have an outer housing forming the support structure (100).

35. Convertible vehicle as defined in any one of claims 1 to 32, **characterized in that** the uprights (32, 34) have an upright housing (220) and a support structure (228) extending in the upright housing.

36. Convertible vehicle as defined in any one of claims 1 to 33, **characterized in that** the at least one cross bar has a cross bar housing (230) and a support structure (228) extending in the cross bar housing.

37. Convertible vehicle as defined in claim 35 or 36, **characterized in that** the support structure (228) is arranged on one side of the surface (F), in which the wind-deflecting flat material (52) extends in the active position.

38. Convertible vehicle as defined in claim 37, **characterized in that** the support structure (228) of the cross bar (126, 128) is arranged on the same side of the surface (F) as the support structure (228) of the uprights (32, 34, 122, 124).

## Revendications

1. Véhicule convertible comprenant une carrosserie de véhicule (10) avec un habitacle (16), au moins une rangée de sièges (18) disposée dans l'habitacle (16), un dispositif de protection contre le retournement (30) disposé derrière ladite au moins une rangée de sièges (16) et présentant une découpe (40, 134, 136, 138) tournée vers l'arrière (42) de la carrosserie de véhicule (10) avec au moins deux montants (32, 34, 122, 124) disposés à distance l'un de l'autre transversalement à une direction longitudinale (14) de la carrosserie de véhicule (10) et s'élevant au-dessus de la carrosserie de véhicule (10) et avec au moins une entretoise transversale (38, 126, 128) s'étendant entre lesdits au moins deux montants (32, 34, 122, 124), et un dispositif pare-vent (50) disposé derrière ladite au moins une rangée de sièges (18), qui réduit un courant d'air à travers ladite au moins une découpe (40, 134, 136, 138) du dispositif de protection contre le retournement (30), et qui présente un dispositif de guidage de matériau plat (60) et un matériau plat (52) déviant le vent maintenu par le dispositif de guidage de matériau plat (60), **caractérisé en ce que** le dispositif de guidage de matériau plat (60) maintient le matériau plat (52) déviant le vent dans une position active dans un plan (F) coupant les montants (32, 34, 122, 124) et ferme de ce fait ladite au moins une découpe (40, 134, 136, 138) en arrêtant le vent, et **en ce que** le matériau plat (52) déviant le vent peut être amené, au moyen du dispositif de guidage de matériau plat (60), de la position active dans une position de rangement située dans la carrosserie de véhicule (10), dans laquelle le matériau plat (52) déviant le vent libère la découpe (40, 134, 136, 138), et inversement.

2. Véhicule convertible selon la revendication 1, **caractérisé en ce que** le dispositif de guidage de matériau plat (60) est pourvu d'un entraînement (82, 174, 176, 194, 196), afin de déplacer le matériau plat (52) déviant le vent entre la position active et la position de rangement et inversement.

3. Véhicule convertible selon la revendication 1 ou 2, **caractérisé en ce qu'**il est prévu dans la carrosserie de véhicule (10) un logement de rangement (62) disposé à proximité du dispositif de protection contre le retournement (30) pour le logement du matériau plat (52) déviant le vent dans la position de rangement.

4. Véhicule convertible selon la revendication 3, **caractérisé en ce que** le logement de rangement (62) présente une ouverture de sortie (64) tournée vers le dispositif de protection contre le retournement (30) pour le matériau plat (52) déviant le vent.

5. Véhicule convertible selon la revendication 4, **caractérisé en ce que** le plan (F), dans lequel s'étend le matériau plat (52) déviant le vent dans la position active, traverse l'ouverture de sortie (64).

6. Véhicule convertible selon la revendication 4 ou 5, **caractérisé en ce que** le dispositif de guidage de matériau plat (60) comprend un élément de fermeture (186) pour l'ouverture de sortie (64).

7. Véhicule convertible selon l'une quelconque des revendications précédentes, **caractérisé en ce que** le matériau plat (52) déviant le vent est rigide à la flexion.

8. Véhicule convertible selon la revendication 7, **caractérisé en ce que** le dispositif de guidage de matériau plat (60) comprend un dispositif de tension (66), avec lequel le matériau plat (52) déviant le vent peut être tendu au-dessus de la découpe (40, 134, 136, 138) dans la position active.

9. Véhicule convertible selon la revendication 8, **caractérisé en ce que** le dispositif de tension (66) comprend un arceau (68) mobile dans un guide (70) et maintenant le matériau plat (52) déviant le vent sous tension dans une direction transversale.

10. Véhicule convertible selon la revendication 9, **caractérisé en ce que** le dispositif de tension (66') présente deux bras (146, 148) pouvant pivoter entre une position active et une position de rangement, qui maintiennent le matériau plat (52) déviant le vent sous tension dans la direction transversale.

11. Véhicule convertible selon la revendication 10, **caractérisé en ce que** les bras (146, 148) sont disposés de manière pivotante à proximité des montants (32, 34) limitant côté extérieur ladite au moins une découpe respective (40, 134, 136, 138) et s'étendent à peu près parallèlement à ceux-ci dans la position active.

12. Véhicule convertible selon la revendication 10 ou 11, **caractérisé en ce que** les bras (146, 148) s'étendent transversalement aux montants (32, 34) dans la position de rangement.

13. Véhicule convertible selon l'une quelconque des revendications 8 à 12, **caractérisé en ce que** le dispositif de guidage de matériau plat (60) comprend un dispositif de rentrage (90) disposé dans la carrosserie de véhicule (10) pour déplacer le matériau plat (52) déviant le vent dans la position de rangement.

14. Véhicule convertible selon la revendication 13, **caractérisé en ce que** le dispositif de rentrage (90) comprend un dispositif d'enroulement (92, 94) pour le matériau plat (52) déviant le vent.

15. Véhicule convertible selon l'une quelconque des revendications 1 à 8, **caractérisé en ce que** le dispositif de guidage de matériau plat (60) comprend un cadre (190) contenant le matériau plat (52) déviant le vent et un dispositif de déplacement (194, 196) pour le mouvement du cadre entre une position de rangement et une position active.

16. Véhicule convertible selon la revendication 15, **caractérisé en ce que** le cadre (190) est disposé en position abaissée par le dispositif de déplacement (194, 196) dans la position de rangement dans la carrosserie de véhicule (10).

17. Véhicule convertible selon la revendication 16, **caractérisé en ce que** dans la position de rangement le cadre (190) est situé dans un plan (F) s'étendant transversalement à la direction longitudinale (14) de la carrosserie de véhicule (10).

18. Véhicule convertible selon l'une quelconque des revendications 15 à 17, **caractérisé en ce que** le dispositif de guidage de matériau plat (60) présente un cadre (190, 190') d'une seule pièce pour maintenir le matériau plat (52).

19. Véhicule convertible selon la revendication 18, **caractérisé en ce que** le cadre (190, 190'), dans la position active du dispositif de guidage de matériau plat (60), positionne le matériau plat (52) dans toutes les découpes (40, 134, 136, 138) en arrêtant le vent.

20. Véhicule convertible selon l'une quelconque des revendications 15 à 17, **caractérisé en ce que** le dispositif de guidage de matériau plat (60) présente un cadre (190") en plusieurs parties.

21. Véhicule convertible selon la revendication 20, **caractérisé en ce que** le cadre en plusieurs parties (190") comprend plusieurs cadres partiels (254, 256, 258) maintenus par un support commun (260).

22. Véhicule convertible selon l'une quelconque des revendications précédentes, **caractérisé en ce que** le dispositif de protection contre le retournement (30) comprend deux montants extérieurs (32, 34) respectivement disposés en position tournée vers les côtés longitudinaux de la carrosserie de véhicule (10) et reliés par l'entretoise transversale (38).

23. Véhicule convertible selon la revendication 22, **caractérisé en ce que** le dispositif de protection contre le retournement (30) présente une découpe (40) encadrée par les montants extérieurs (32, 34) et l'entretoise transversale (38).

24. Véhicule convertible selon l'une quelconque des revendications 1 à 21, **caractérisé en ce que** le dispositif de protection contre le retournement (30') comprend deux éléments de protection contre le retournement (130, 132), dont chacun comprend deux montants (32, 122, 34, 124) et une entretoise transversale (126, 128).

25. Véhicule convertible selon la revendication 24, **caractérisé en ce que** chacun des éléments de protection contre le retournement (130, 132) présente un montant extérieur (32, 34), disposé en position tournée vers le côté longitudinal respectif de la carrosserie de véhicule (10), et un montant intérieur (122, 124).

26. Véhicule convertible selon la revendication 24 ou 25, **caractérisé en ce qu'**une (138) des découpes (134, 136, 138) du dispositif de protection contre le retournement (30') est située entre les éléments de protection contre le retournement (130, 132).

27. Véhicule convertible selon l'une quelconque des revendications 24 à 26, **caractérisé en ce que** chacun des éléments de protection contre le retournement (130, 132) présente une autre découpe (134, 136) encadrée par les montants (32, 122, 34, 124) et les entretoises transversales (126, 128).

28. Véhicule convertible selon l'une quelconque des revendications précédentes, **caractérisé en ce qu'**au moins deux des montants (32, 34, 122, 124) présentent au moins un logement (102, 106, 152, 154) pour le dispositif de guidage de matériau plat (60).

29. Véhicule convertible selon la revendication 28, **caractérisé en ce que** les montants extérieurs présentent chacun un logement (102, 106).

30. Véhicule convertible selon la revendication 28 ou 29, **caractérisé en ce qu'**au moins un montant intérieur (122, 124) présente au moins un logement (102).

31. Véhicule convertible selon l'une quelconque des revendications 28 à 30, **caractérisé en ce qu'**au moins un des montants intérieurs (122, 124) est traversé par le matériau plat (52) déviant le vent se trouvant dans la position active.

32. Véhicule convertible selon la revendication 31, **caractérisé en ce que** les montants intérieurs sont pourvus de passages transversaux (152, 154), qui sont traversés par le matériau plat (52) déviant le vent se trouvant dans la position active.

33. Véhicule convertible selon l'une quelconque des revendications précédentes, **caractérisé en ce que** les montants (32, 34, 122, 124) présentent un boîtier extérieur formant une structure de support (100).

34. Véhicule convertible selon l'une quelconque des revendications précédentes, **caractérisé en ce que** les entretoises transversales (38, 126, 128) présentent un boîtier extérieur formant la structure de support (100).

35. Véhicule convertible selon l'une quelconque des revendications 1 à 32, **caractérisé en ce que** les montants (32, 34) présentent un boîtier de montant (220) et une structure de support (228) s'étendant dans le boîtier de montant.

36. Véhicule convertible selon l'une quelconque des revendications 1 à 33, **caractérisé en ce que** ladite au moins une entretoise transversale présente un boîtier d'entretoise transversale (230) et une structure de support (228) s'étendant dans le boîtier d'entretoise transversale.

37. Véhicule convertible selon la revendication 35 ou 36, **caractérisé en ce que** la structure de support (228) est disposée sur un côté du plan (F), dans lequel le matériau plat (52) déviant le vent s'étend dans la position active.

38. Véhicule convertible selon la revendication 37, **caractérisé en ce que** la structure de support (228) de l'entretoise transversale (126, 128) est disposée sur le même côté du plan (F) que la structure de support (228) des montants (32, 34, 122, 124).
